# EUROPEAN PATENT APPLICATION

(11) **EP 4 546 676 A1**
(43) Date of publication of application: **30.04.2025**
(21) Application number: 23842145.7
(22) Date of filing: 10.07.2023
(51) Int. Cl.: H04J 14/02

(54) **COMPUTING CLUSTER AND CONNECTION METHOD FOR COMPUTING CLUSTER**

(30) Priority: 22.07.2022 CN 202210868810; 25.11.2022 CN 202211490529
(71) Applicant: Huawei Technologies Co., Ltd., Shenzhen, Guangdong 518129 (CN)
(72) Inventor: CHEN, Tianxiang, Shenzhen, Guangdong 518129 (CN); LING, Wenkai, Shenzhen, Guangdong 518129 (CN); SHEN, Shengyu, Shenzhen, Guangdong 518129 (CN)
(74) Representative: Epping - Hermann - Fischer
(86) International application number: PCT/CN2023/106503
(87) International publication number: WO 2024/017080

(57) **Abstract**

A computing cluster is provided, and is used in a cluster communication scenario. In the computing cluster, a plurality of computing apparatuses in a first computing node are connected to at least one first wavelength cross-connect device, and a plurality of computing apparatuses in a second computing node are connected to at least one second wavelength cross-connect device. In addition, the at least one first wavelength cross-connect device is connected to the at least one second wavelength cross-connect device via an optical cross-connect device. In this way, any computing apparatus in the first computing node can be connected to any computing apparatus in the second computing node via the at least one first wavelength cross-connect device, the optical cross-connect device, and the at least one second wavelength cross-connect device. According to this solution, it can be ensured that the plurality of computing apparatuses in the first computing node and the plurality of computing apparatuses in the second computing node are fully connected via the wavelength cross-connect devices and the optical cross-connect device, so that a link conflict is completely avoided, and performance of communication between the computing apparatuses is ensured.

## Description

This application claims priorities to Chinese Patent Application No. 202210868810.3, filed with the China National Intellectual Property Administration on July 22, 2022 and entitled "COMPUTING CLUSTER", and to Chinese Patent Application No. 202211490529.7, filed with the China National Intellectual Property Administration on November 25, 2022 and entitled "COMPUTING CLUSTER AND COMPUTING CLUSTER CONNECTION METHOD", both of which are incorporated herein by reference in their entireties.

### TECHNICAL FIELD

This application relates to the field of computing technologies, and in particular, to a computing cluster and a computing cluster connection method.

### BACKGROUND

Currently, in a cluster communication scenario, different computing apparatuses in a same cluster usually need to exchange a large amount of data. The cluster communication scenario may include, for example, an artificial intelligence (Artificial Intelligence, AI) training scenario and a high performance computing (High Performance Computing, HPC) scenario. For example, in the AI training scenario, as a model scale becomes increasingly large, distributed AI training becomes a mainstream trend. In the distributed AI training, different training apparatuses are responsible for different steps in an entire training process, and implement data exchange in the training process through mutual communication. Because a large amount of data needs to be exchanged between the different training apparatuses, communication between the training apparatuses becomes an important part that affects model training performance.

Currently, communication between the different computing apparatuses in the same cluster is implemented by using an electrical switch based network topology. All computing apparatuses in the same cluster share a same network topology. Usually, a communication link used for data exchange is selected from a plurality of communication links in the network topology in a random routing manner. In this case, the different computing apparatuses may select a same communication link to exchange data. Consequently, a link conflict occurs, and performance of communication is affected.

For a case in which the link conflict occurs in the network topology, route configuration manners such as load balancing routing and adaptive routing are provided in the conventional technology to reduce occurrence of a link conflict. However, the manners have respective disadvantages. Due to a limitation of a feature of the electrical switch based network topology, the route configuration manners provided in the conventional technology usually can only reduce occurrence of the link conflict as much as possible, and cannot completely avoid the link conflict. Consequently, performance of communication between the computing apparatuses is easily affected.

### SUMMARY

This application provides a computing cluster, to completely avoid a link conflict, and ensure performance of communication between computing apparatuses.

A first aspect of this application provides a computing cluster, including a first computing node and a second computing node, where the first computing node and the second computing node each include a plurality of computing apparatuses.

The plurality of computing apparatuses in the first computing node are connected to at least one first wavelength cross-connect device, and the plurality of computing apparatuses in the second computing node are connected to at least one second wavelength cross-connect device. For example, it is assumed that the first computing node includes N computing apparatuses, and the N computing apparatuses are all connected to one first wavelength cross-connect device, where N is an integer greater than 1.

In addition, the at least one first wavelength cross-connect device connected to the first computing node is connected to the at least one second wavelength cross-connect device connected to the second computing node via an optical cross-connect device. In this way, any one of the plurality of computing apparatuses in the first computing node can be connected to any one of the plurality of computing apparatuses in the second computing node via the at least one first wavelength cross-connect device, the optical cross-connect device, and the at least one second wavelength cross-connect device. In other words, when the computing apparatus in the first computing node sends data to the computing apparatus in the second computing node, the data sequentially passes through the first wavelength cross-connect device, the optical cross-connect device, and the second wavelength cross-connect device, and finally reaches the computing apparatus in the second computing node.

In a process in which the computing apparatus in the first computing node communicates with the computing apparatus in the second computing node, after receiving data sent by different computing apparatuses, the first wavelength cross-connect device includes, in optical signals of different wavelengths, the data from the different apparatuses. Then, the first wavelength cross-connect device chooses, based on destinations of the data from the different apparatuses, to send the optical signals of different wavelengths to one or more ports in the optical cross-connect device, so that the optical cross-connect device forwards the optical signals to the second wavelength cross-connect device. Finally, the second wavelength cross-connect device decomposes the optical signals sent by the optical cross-connect device, and respectively sends, to corresponding computing apparatuses in the second computing node, optical signals obtained through decomposition.

Because of a feature of optical signal transmission, optical signals of a plurality of wavelengths can be simultaneously transmitted through a same optical fiber. Therefore, in this solution, the data sent by the different computing apparatuses is carried in the optical signals of different wavelengths, so that the data sent by the different computing apparatuses can be sent through a same path, and the data does not interfere with each other. This ensures that the plurality of computing apparatuses in the first computing node and the plurality of computing apparatuses in the second computing node can be fully connected via the wavelength cross-connect devices and the optical cross-connect device, and further completely avoids a link conflict and ensures performance of communication between the computing apparatuses.

In a possible implementation, the first computing node is a first physical device, the plurality of computing apparatuses in the first computing node belong to the first physical device, and a quantity of the at least one first wavelength cross-connect device is 1. The second computing node is a second physical device, the plurality of computing apparatuses in the second computing node belong to the second physical device, and a quantity of the at least one second wavelength cross-connect device is 1. The first physical device and the second physical device may be physical servers. Simply, the plurality of computing apparatuses in the first computing node may belong to one physical server, and the plurality of computing apparatuses in the second computing node also belong to one physical server. In other words, the computing apparatuses in the two different physical servers are fully connected via one first wavelength cross-connect device, the optical cross-connect device, and one second wavelength cross-connect device.

In this solution, in a small-scale computing cluster, computing apparatuses in different child nodes are fully connected via a wavelength cross-connect device and an optical cross-connect device, so that a link conflict between the computing apparatuses can be avoided, and performance of communication between the computing apparatuses is ensured.

In a possible implementation, the plurality of computing apparatuses in the first computing node belong to a plurality of child nodes, one child node corresponds to one wavelength cross-connect device, the plurality of computing apparatuses in the second computing node belong to a plurality of child nodes, and one child node corresponds to one wavelength cross-connect device. In addition, each child node in the first computing node and the second computing node may include one or more computing apparatuses. The child node may be a physical node, and may be specifically a physical server.

In this solution, when a computing node includes a large quantity of computing apparatuses, one computing node may be divided into a plurality of child nodes, and each child node includes a plurality of computing apparatuses. This helps manage the large quantity of computing apparatuses and allocate tasks, and performance of communication between the computing apparatuses is not affected.

In a possible implementation, there are a plurality of optical cross-connect devices in the computing cluster. The plurality of computing apparatuses in the first computing node and the plurality of computing apparatuses in the second computing node each have a number, and computing apparatuses with a same number in the first computing node and the second computing node are connected to a same optical cross-connect device via wavelength cross-connect devices.

For example, numbers allocated to M computing apparatuses in the first computing node are respectively 1, 2, 3, ..., and M, and numbers allocated to M computing apparatuses in the second computing node are also respectively 1, 2, 3, ..., and M. In this case, computing apparatuses numbered 1 in the first computing node and the second computing node may access an optical cross-connect device 1, computing apparatuses numbered 2 in the first computing node and the second computing node may access an optical cross-connect device 2, and the rest is deduced by analogy.

In this solution, the plurality of computing apparatuses in each computing node are numbered in a same numbering order, so that the computing apparatuses with the same number in the different computing nodes all can access the same optical cross-connect device via the wavelength cross-connect devices, and mutual communication between the computing apparatuses with the same number in each computing node is implemented, thereby meeting a requirement of an AI training scenario.

In a possible implementation, there are a plurality of optical cross-connect devices in the computing cluster. The plurality of computing apparatuses in the first computing node belong to the plurality of child nodes, and the plurality of computing apparatuses in the second computing node belong to the plurality of child nodes. Each child node may be specifically a physical server. In addition, the plurality of child nodes in the first computing node and the plurality of child nodes in the second computing node each have a number. Child nodes with a same number in the first computing node and the second computing node are connected to a same optical cross-connect device via wavelength cross-connect devices.

In this solution, a plurality of physical servers in each computing node are numbered in a same numbering order, so that physical servers with a same number in different computing nodes all can access a same optical cross-connect device via wavelength cross-connect devices, and mutual communication between the physical servers with the same number in each computing node is implemented, thereby meeting a requirement of an AI training scenario.

In a possible implementation, a first computing apparatus in the first computing node is connected to a second computing apparatus in the second computing node, and when the first computing apparatus in the first computing node needs to be connected to a third computing apparatus in the second computing node, a wavelength cross-connect device that connects both the second computing apparatus and the third computing apparatus switches a connection between the first computing apparatus and the second computing apparatus to a connection between the first computing apparatus and the third computing apparatus.

In this solution, a connection between computing apparatuses is switched on a wavelength cross-connect device, so that a computing apparatus can quickly switch a communication object in a communication process, and communication flexibility between the computing apparatuses is ensured.

In a possible implementation, that a target wavelength cross-connect device that connects the second computing apparatus and the third computing apparatus switches a connection between the first computing apparatus and the second computing apparatus to a connection between the first computing apparatus and the third apparatus specifically includes: The third computing apparatus sends a request to the target wavelength cross-connect device, and the target wavelength cross-connect device switches, based on the request, an optical switch to an output port connected to the third computing apparatus, to connect an input port connected to the first computing apparatus to the output port connected to the third computing apparatus.

In this way, an optical signal sent by the first computing apparatus to the target wavelength cross-connect device may be forwarded to the third computing apparatus.

In a possible implementation, each computing apparatus in the first computing node and the second computing node includes a routing table, and the routing table indicates a connection relationship between a wavelength cross-connect device connected to the computing apparatus and another computing apparatus.

Specifically, the routing table may include a source computing node, a destination computing node, an output port (namely, an input port in the optical cross-connect device) that is in a wavelength cross-connect device at a transmit end and that is connected to the optical cross-connect device, and an input port (namely, an output port in the optical cross-connect device) that is in a wavelength cross-connect device at a receive end and that is connected to the optical cross-connect device. In other words, for any computing apparatus in the computing cluster, the computing apparatus can determine, based on the routing table, the connection relationship between the wavelength cross-connect device connected to the computing apparatus and the another computing apparatus in another computing node, and can send a corresponding request to the wavelength cross-connect device to switch a connection when a communication object needs to be switched.

In addition, that a target wavelength cross-connect device that connects the second computing apparatus and the third computing apparatus switches a connection between the first computing apparatus and the second computing apparatus to a connection between the first computing apparatus and the third apparatus specifically includes:
The third computing apparatus determines, based on a routing table in the third computing apparatus, an input port connected to the first computing apparatus and an output port connected to the third computing apparatus that are in the target wavelength cross-connect device, and sends a request to the target wavelength cross-connect device, and the target wavelength cross-connect device connects, based on the request, the input port connected to the first computing apparatus to the output port connected to the third computing apparatus. Specifically, the third computing apparatus may determine, based on the configured routing table, a port through which the target wavelength cross-connect device is connected to the first computing apparatus in the computing node, and further send the request to the target wavelength cross-connect device based on the routing table.

In a possible implementation, each computing apparatus generates the routing table by receiving a routing table configuration request sent by a software defined network (Software Defined Network, SDN) controller, and the SDN controller is configured to configure a connection between wavelength cross-connect devices in the optical cross-connect device.

In a possible implementation, the computing cluster further includes a third computing node, the first computing node is connected to the second computing node via a computing apparatus in a first child node in the first computing node, the first computing node is connected to the third computing node via a computing apparatus in a second child node in the first computing node, and when the computing apparatus in the first child node needs to communicate with a computing apparatus in the third computing node, the computing apparatus in the first child node sends data to the computing apparatus in the second child node, and then the computing apparatus in the second child node sends the data to the computing apparatus in the third computing node.

In other words, when a computing apparatus in a child node in a computing node cannot establish a connection to a computing apparatus in another computing node via the wavelength cross-connect device and the optical cross-connect device, the computing apparatus in the child node may send data to a computing apparatus in another child node in the same computing node, and the computing apparatus in the another child node helps forward the data to the computing apparatus in the another computing node, so that communication between any computing apparatuses in a large-scale computing cluster is implemented.

In a possible implementation, the computing cluster is configured to execute an artificial intelligence task or an HPC task. An example in which the computing cluster is configured to execute the artificial intelligence task is used. The artificial intelligence task is specifically, for example, a distributed AI training task. In the distributed AI training task, data flows exchanged between computing apparatuses are usually continuous and last long, in other words, one computing apparatus usually continuously and fixedly exchanges data with another computing apparatus. Therefore, after an optical path used for communication between two computing apparatuses is configured via the wavelength cross-connect device and the optical cross-connect device, the configured optical path can be persistently maintained, so that a delay problem caused by frequent optical path switching can be effectively avoided.

A second aspect of this application provides a computing cluster connection method. A computing cluster includes a first computing node and a second computing node, and the method includes:
connecting a plurality of computing apparatuses in the first computing node to at least one first wavelength cross-connect device, and connecting a plurality of computing apparatuses in the second computing node to at least one second wavelength cross-connect device; and
connecting the at least one first wavelength cross-connect device to the at least one second wavelength cross-connect device via an optical cross-connect device, to enable any one of the plurality of computing apparatuses in the first computing node to be connected to any one of the plurality of computing apparatuses in the second computing node via the at least one first wavelength cross-connect device, the optical cross-connect device, and the at least one second wavelength cross-connect device.

In a possible implementation, the first computing node is a first physical device, the plurality of computing apparatuses in the first computing node belong to the first physical device, and a quantity of the at least one first wavelength cross-connect device is 1. The second computing node is a second physical device, the plurality of computing apparatuses in the second computing node belong to the second physical device, and a quantity of the at least one second wavelength cross-connect device is 1. The first physical device and the second physical device may be physical servers. In a possible implementation, the plurality of computing apparatuses in the first computing node belong to a plurality of child nodes, one child node corresponds to one wavelength cross-connect device, the plurality of computing apparatuses in the second computing node belong to a plurality of child nodes, and one child node corresponds to one wavelength cross-connect device.

In a possible implementation, there are a plurality of optical cross-connect devices in the computing cluster, and the plurality of computing apparatuses in the first computing node and the plurality of computing apparatuses in the second computing node each have a number. The connecting the at least one first wavelength cross-connect device to the at least one second wavelength cross-connect device via an optical cross-connect device may specifically include: connecting wavelength cross-connect devices connected to computing apparatuses with a same number in the first computing node and the second computing node to a same optical cross-connect device.

Alternatively, the plurality of computing apparatuses in the first computing node belong to the plurality of child nodes, the plurality of computing apparatuses in the second computing node belong to the plurality of child nodes, the plurality of child nodes in the first computing node and the plurality of child nodes in the second computing node each have a number. The connecting the at least one first wavelength cross-connect device to the at least one second wavelength cross-connect device via an optical cross-connect device specifically includes: connecting wavelength cross-connect devices connected to child nodes with a same number in the first computing node and the second computing node to a same optical cross-connect device.

In a possible implementation, a first computing apparatus in the first computing node is connected to a second computing apparatus in the second computing node, and when the first computing apparatus in the first computing node needs to be connected to a third computing apparatus in the second computing node, a wavelength cross-connect device that connects both the second computing apparatus and the third computing apparatus switches a connection between the first computing apparatus and the second computing apparatus to a connection between the first computing apparatus and the third computing apparatus.

In a possible implementation, that a target wavelength cross-connect device that connects the second computing apparatus and the third computing apparatus switches a connection between the first computing apparatus and the second computing apparatus to a connection between the first computing apparatus and the third apparatus includes: The third computing apparatus sends a request to the target wavelength cross-connect device, and the target wavelength cross-connect device connects, based on the request, the input port connected to the first computing apparatus to the output port connected to the third computing apparatus.

In a possible implementation, each computing apparatus in the first computing node and the second computing node includes a routing table, and the routing table indicates a connection relationship between a wavelength cross-connect device connected to the computing apparatus and another computing apparatus. That a target wavelength cross-connect device that connects the second computing apparatus and the third computing apparatus switches a connection between the first computing apparatus and the second computing apparatus to a connection between the first computing apparatus and the third apparatus specifically includes:
The third computing apparatus determines, based on a routing table in the third computing apparatus, an input port connected to the first computing apparatus and an output port connected to the third computing apparatus that are in the target wavelength cross-connect device, and sends a request to the target wavelength cross-connect device, and the target wavelength cross-connect device connects, based on the request, the input port connected to the first computing apparatus to the output port connected to the third computing apparatus.

In a possible implementation, the method further includes:
An SDN controller configures a connection between wavelength cross-connect devices in the optical cross-connect device.

The SDN controller sends a routing table configuration request to each computing apparatus, to enable each computing apparatus to generate the routing table.

In a possible implementation, the computing cluster further includes a third computing node. The method further includes:
connecting a computing apparatus in a first child node in the first computing node to the second computing node, and connecting a computing apparatus in a second child node in the first computing node to the third computing node, to enable, when the computing apparatus in the first child node needs to communicate with a computing apparatus in the third computing node, the computing apparatus in the first child node to send data to the computing apparatus in the second child node, and the computing apparatus in the second child node to send the data to the computing apparatus in the third computing node.

In a possible implementation, the computing cluster is configured to execute an artificial intelligence task or an HPC task.

For technical effects brought by any implementation of the second aspect, refer to the technical effects brought by different implementations of the first aspect. Details are not described herein again.

### BRIEF DESCRIPTION OF DRAWINGS

FIG. 1 is a diagram of a structure of an electrical switch based network topology according to an embodiment of this application;
FIG. 2 is a diagram of a structure of a computing cluster according to an embodiment of this application;
FIG. 3 is a diagram of a structure of another computing cluster according to an embodiment of this application;
FIG. 4 is a diagram of a structure of another computing cluster according to an embodiment of this application;
FIG. 5 is a diagram of a structure of another computing cluster according to an embodiment of this application;
FIG. 6A is a diagram of a structure of another computing cluster according to an embodiment of this application;
FIG. 6B is a diagram of a structure of another computing cluster according to an embodiment of this application;
FIG. 7 is a diagram of a structure of a transmit end of a wavelength cross-connect device according to an embodiment of this application;
FIG. 8 is a diagram of a structure of a receive end of a wavelength cross-connect device according to an embodiment of this application;
FIG. 9 is a diagram of a structure of an MEMS-based optical switching device according to an embodiment of this application;
FIG. 10 is a schematic networking diagram of a computing cluster according to an embodiment of this application;
FIG. 11 is a schematic flowchart of configuring an optical cross-connect device by an SDN controller according to an embodiment of this application;
FIG. 12 is a schematic flowchart of configuring a wavelength cross-connect device according to an embodiment of this application;
FIG. 13 is a diagram of a structure of a configured wavelength cross-connect device according to an embodiment of this application;
FIG. 14A is a schematic connection diagram of a computing cluster according to an embodiment of this application;
FIG. 14B is a schematic configuration flowchart of communication between computing apparatuses according to an embodiment of this application;
FIG. 15A is a schematic connection diagram of another computing cluster according to an embodiment of this application;
FIG. 15B is a schematic configuration flowchart of communication between computing apparatuses according to an embodiment of this application;
FIG. 16 is a schematic configuration diagram of a computing cluster in an AI distributed training scenario according to an embodiment of this application;
FIG. 17 is a schematic configuration diagram of another computing cluster in an AI distributed training scenario according to an embodiment of this application;
FIG. 18 is a schematic configuration diagram of a computing cluster in a tenant scenario according to an embodiment of this application; and
FIG. 19 is a schematic configuration diagram of another computing cluster in a tenant scenario according to an embodiment of this application.

### DESCRIPTION OF EMBODIMENTS

In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

In embodiments of this application, unless otherwise specified, "a plurality of" means two or more. For example, "a plurality of nodes" means two or more nodes. "At least one" means any quantity, such as one, two, or more. "A and/or B" may represent that only A exists, only B exists, or both A and B are included. "At least one of A, B, and C" may represent that only A exists, only B exists, only C exists, A and B are included, B and C are included, A and C are included, or A, B, and C are included. In this application, the terms such as "first" and "second" are used only to distinguish between different objects, and do not indicate priorities or importance of the objects.

Currently, in the field of cluster communication, different computing apparatuses in a same cluster usually need to exchange a large amount of data. The cluster communication scenario may include, for example, an AI training scenario and an HPC scenario. The AI training scenario may be specifically a scenario in which computing apparatuses distributed in different areas jointly train an AI model. The HPC scenario may mean that a plurality of computing apparatuses in an HPC cluster jointly perform computing of a large-scale scientific problem or processing on massive data, for example, a task such as scientific research, weather forecast, or computing simulation. For ease of description, the following describes in detail a computing cluster provided in embodiments of this application by using an example in which the computing cluster is applied to an AI training scenario.

In a distributed AI training scenario, a large quantity of training apparatuses are usually used to train an AI model, to obtain an AI model with an optimal structure parameter through training. The AI model obtained through the training can replace human to complete some specific work, for example, image classification, speech recognition, and speech translation. During specific implementation, training apparatuses distributed at different locations separately train an AI model by using a training algorithm, combine respective training results, and enter a next round of iterative training process. Through a plurality of rounds of iterative training of the plurality of training apparatuses, a trained AI model can be finally obtained.

As a quantity of application scenario requirements increases, a scale of an AI model and a scale of a dataset used to train the AI model are increasingly large, a quantity of training apparatuses participating in training a same AI model is also increasingly large, and an amount of data that needs to be exchanged between the training apparatuses is also increasingly large. Therefore, communication between the training apparatuses becomes an important part that affects model training performance.

Currently, communication between different training apparatuses in the distributed AI training scenario is implemented by using an electrical switch based network topology. All training apparatuses in the distributed AI training scenario share a same network topology. Usually, a communication link used for data exchange is selected from a plurality of communication links in the network topology in a random routing manner. In this case, the different training apparatuses may select a same communication link to exchange data. Consequently, a link conflict occurs, and performance of communication is affected.

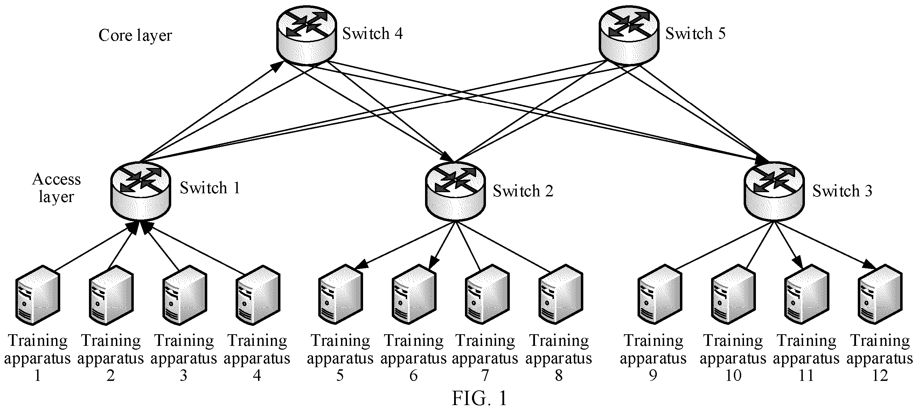

For example, FIG. 1 is a diagram of a structure of an electrical switch based network topology according to an embodiment of this application. As shown in FIG. 1, a distributed AI training scenario includes 12 training apparatuses in total, which are respectively a training apparatus 1 to a training apparatus 12. The training apparatus 1 to the training apparatus 4 are all connected to a switch 1 at an access layer, the training apparatus 5 to the training apparatus 8 are all connected to a switch 2 at the access layer, and the training apparatus 9 to the training apparatus 12 are all connected to a switch 3 at the access layer. In addition, the switch 1 and the switch 2 at the access layer are both connected to a switch 4 and a switch 5 at a core layer through two communication links.

In a process in which the training apparatus performs AI training, the training apparatus 1 needs to send data to the training apparatus 5, the training apparatus 2 needs to send data to the training apparatus 6, the training apparatus 3 needs to send data to the training apparatus 11, and the training apparatus 4 needs to send data to the training apparatus 12. Therefore, the training apparatus 1 to the training apparatus 4 each send the data to the switch 1. However, in a process in which the switch 1 forwards the data, the switch 1 forwards the data from the training apparatus 1 to the training apparatus 4 through a link between the switch 1 and the switch 4. In other words, the data sent by the training apparatus 1 to the training apparatus 4 is all forwarded through the same communication link. Consequently, a link conflict occurs, and performance of communication between the training apparatuses is affected.

In view of this, embodiments of this application provide a computing cluster, and a plurality of groups of wavelength cross-connect devices and an optical cross-connect device cooperate to implement communication between a plurality of computing nodes. The optical cross-connect device is configured to implement interconnection between the wavelength cross-connect devices. The wavelength cross-connect device includes, in optical signals of different wavelengths by using a feature of optical signal transmission, data sent by different computing apparatuses, so that the data sent by the different computing apparatuses can be sent through a same path, and the data does not interfere with each other. This completely avoids a link conflict, and ensures performance of communication between the computing apparatuses.

Specifically, an embodiment of this application provides a computing cluster, including a first computing node and a second computing node, where the first computing node and the second computing node each include a plurality of computing apparatuses.

The plurality of computing apparatuses in the first computing node are connected to at least one first wavelength cross-connect device, and the plurality of computing apparatuses in the second computing node are connected to at least one second wavelength cross-connect device. For example, it is assumed that the first computing node includes N computing apparatuses, and the N computing apparatuses are all connected to one first wavelength cross-connect device, where N is an integer greater than 1. For another example, it is assumed that the first computing node includes 2N computing apparatuses, where N computing apparatuses are connected to one first wavelength cross-connect device, and the other N computing apparatuses are connected to another wavelength cross-connect device.

In addition, the at least one first wavelength cross-connect device is connected to the at least one second wavelength cross-connect device via an optical cross-connect device, in other words, the at least one first wavelength cross-connect device and the at least one second wavelength cross-connect device are connected to each other via the optical cross-connect device.

In this way, any one of the plurality of computing apparatuses in the first computing node can be connected to any one of the plurality of computing apparatuses in the second computing node via the at least one first wavelength cross-connect device, the optical cross-connect device, and the at least one second wavelength cross-connect device. In other words, when the computing apparatus in the first computing node sends data to the computing apparatus in the second computing node, the data sequentially passes through the first wavelength cross-connect device, the optical cross-connect device, and the second wavelength cross-connect device, and finally reaches the computing apparatus in the second computing node.

In a process in which the computing apparatus in the first computing node communicates with the computing apparatus in the second computing node, the first wavelength cross-connect device connected to the computing apparatus in the first computing node includes, in optical signals of different wavelengths, data sent by different computing apparatuses in the first computing node, and sends the optical signals of different wavelengths to one or more ports in the optical cross-connect device. Then, the optical cross-connect device forwards, to the second wavelength cross-connect device, the optical signals received from the first wavelength cross-connect device. Finally, the second wavelength cross-connect device decomposes the optical signals sent by the optical cross-connect device, and respectively sends, to corresponding computing apparatuses in the second computing node, optical signals obtained through decomposition. Simply, after receiving the data sent by the different computing apparatuses, the first wavelength cross-connect device includes the data from the different apparatuses in the optical signals of different wavelengths. Then, the first wavelength cross-connect device chooses, based on destinations of the data from the different apparatuses, to send the optical signals of different wavelengths to the one or more ports in the optical cross-connect device.

Similarly, the computing apparatus in the second computing node may also send data to the computing apparatus in the first computing node in a similar manner. To be specific, when the computing apparatus in the second computing node sends the data to the computing apparatus in the first computing node, the data sequentially passes through the second wavelength cross-connect device, the optical cross-connect device, and the first wavelength cross-connect device, and finally reaches the computing apparatus in the first computing node.

Because of a feature of optical signal transmission, optical signals of a plurality of wavelengths can be simultaneously transmitted through a same optical fiber. Therefore, in this application, the data sent by the different computing apparatuses is carried in the optical signals of different wavelengths, so that the data sent by the different computing apparatuses can be sent through a same path, and the data does not interfere with each other. This ensures that the plurality of computing apparatuses in the first computing node and the plurality of computing apparatuses in the second computing node can be fully connected via the wavelength cross-connect devices and the optical cross-connect device, and further completely avoids a link conflic phenomenon and ensures performance of communication between the computing apparatuses.

Optionally, the computing cluster in this embodiment may be configured to execute an artificial intelligence task or an HPC task. An example in which the computing cluster is configured to execute the artificial intelligence task is used. The artificial intelligence task is specifically, for example, a distributed AI training task. In the distributed AI training task, data flows exchanged between computing apparatuses are usually continuous and last long, in other words, one computing apparatus usually continuously and fixedly exchanges data with another computing apparatus. Therefore, after an optical path used for communication between two computing apparatuses is configured via the wavelength cross-connect device and the optical cross-connect device, the configured optical path can be persistently maintained, so that a delay problem caused by frequent optical path switching can be effectively avoided.

Optionally, in a possible example, the first computing node is a first physical device, the plurality of computing apparatuses in the first computing node belong to the first physical device, and a quantity of the at least one first wavelength cross-connect device is 1. The second computing node is a second physical device, the plurality of computing apparatuses in the second computing node belong to the second physical device, and a quantity of the at least one second wavelength cross-connect device is 1. The first physical device and the second physical device may be physical servers.

In other words, the plurality of computing apparatuses in the first computing node belong to one physical server, and the plurality of computing apparatuses in the second computing node also belong to one physical server. In addition, the plurality of computing apparatuses in the first computing node all access the same first wavelength cross-connect device, and the plurality of computing apparatuses in the second computing node all access the same second wavelength cross-connect device. In other words, the computing apparatuses in the two different physical servers are fully connected via one first wavelength cross-connect device, the optical cross-connect device, and one second wavelength cross-connect device.

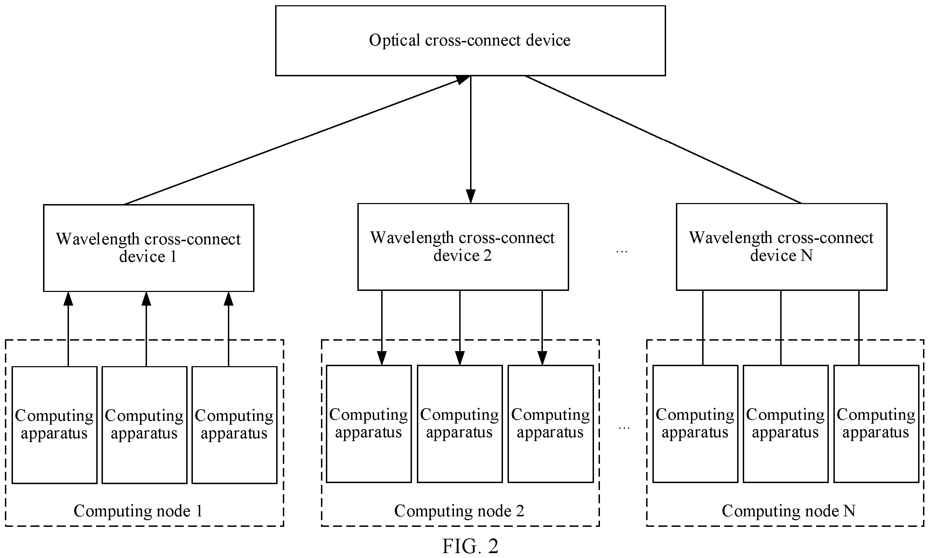

For example, FIG. 2 is a diagram of a structure of a computing cluster according to an embodiment of this application. As shown in FIG. 2, the computing cluster may include N computing nodes (to be specific, a computing node 1 to a computing node N), N wavelength cross-connect devices, and one optical cross-connect device. The N computing nodes are all physical nodes, in other words, the N computing nodes may be specifically N physical servers. In addition, each of the N computing nodes includes three computing apparatuses, in other words, one physical server includes three computing apparatuses. Each computing node corresponds to one wavelength cross-connect device. To be specific, the computing node 1 corresponds to a wavelength cross-connect device 1, the computing node 2 corresponds to a wavelength cross-connect device 2, ..., and the computing node N corresponds to a wavelength cross-connect device N.

The foregoing first computing node may correspond to the computing node 1 in FIG. 2, and the foregoing second computing node may correspond to the computing node 2 in FIG. 2. The foregoing at least one first wavelength cross-connect device may correspond to the wavelength cross-connect device 1 in FIG. 2, and the foregoing at least one second wavelength cross-connect device may correspond to the wavelength cross-connect device 2 in FIG. 2.

When the three computing apparatuses in the computing node 1 respectively need to send data to the three computing apparatuses in the computing node 2, the three computing apparatuses in the computing node 1 separately send the data to the wavelength cross-connect device 1. The wavelength cross-connect device 1 includes, in optical signals of different wavelengths, the data received from the three computing apparatuses, to obtain three optical signals of different wavelengths. In addition, the wavelength cross-connect device 1 simultaneously sends the three optical signals of different wavelengths to the optical cross-connect device through a same optical fiber. Further, the optical cross-connect device forwards the three optical signals of different wavelengths to the wavelength cross-connect device 2 through another optical fiber. After receiving the three optical signals of different wavelengths through the optical fiber connected to the optical cross-connect device, the wavelength cross-connect device 2 may respectively send the three optical signals of different wavelengths to the three computing apparatuses in the computing node 2, to implement communication between a plurality of computing apparatuses in the computing node 1 and a plurality of computing apparatuses in the computing node 2.

In the embodiment described in FIG. 2, one computing node corresponds to one wavelength cross-connect device. In some other possible embodiments, one computing node may correspond to a plurality of wavelength cross-connect devices, in other words, a plurality of computing apparatuses in one computing node respectively access the plurality of wavelength cross-connect devices.

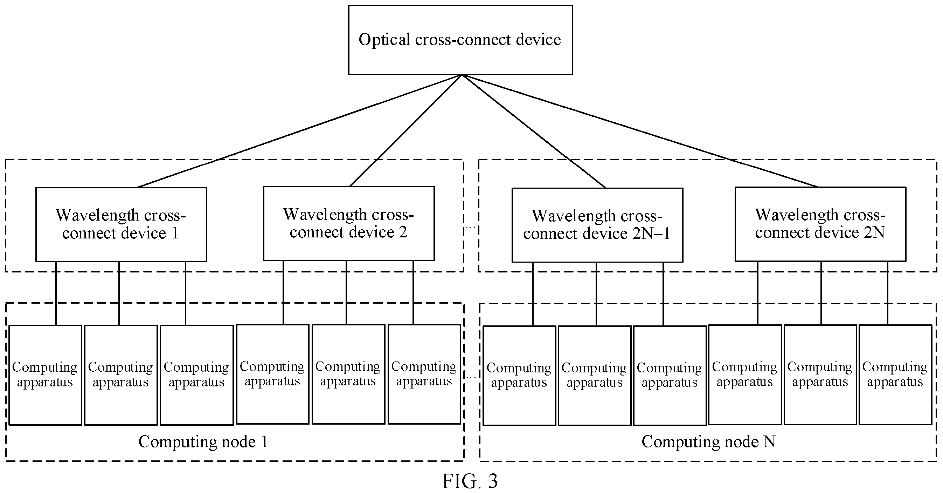

For example, FIG. 3 is a diagram of a structure of another computing cluster according to an embodiment of this application. A difference between the embodiment shown in FIG. 3 and the embodiment shown in FIG. 2 lies in that, in FIG. 3, one computing node corresponds to a plurality of wavelength cross-connect devices.

As shown in FIG. 3, each of N computing nodes in the computing cluster includes six computing apparatuses, and each computing node corresponds to two wavelength cross-connect devices. For example, a computing node 1 corresponds to a wavelength cross-connect device 1 and a wavelength cross-connect device 2, the wavelength cross-connect device 1 is connected to three computing apparatuses in the computing node 1, and the wavelength cross-connect device 2 is connected to the other three computing apparatuses in the computing node 1.

The foregoing first computing node may correspond to the computing node 1 in FIG. 3, and the foregoing second computing node may correspond to a computing node N in FIG. 3. The foregoing at least one first wavelength cross-connect device may correspond to the wavelength cross-connect device 1 and the wavelength cross-connect device 2 in FIG. 3, and the foregoing at least one second wavelength cross-connect device may correspond to a wavelength cross-connect device 2N-1 and a wavelength cross-connect device 2N in FIG. 3.

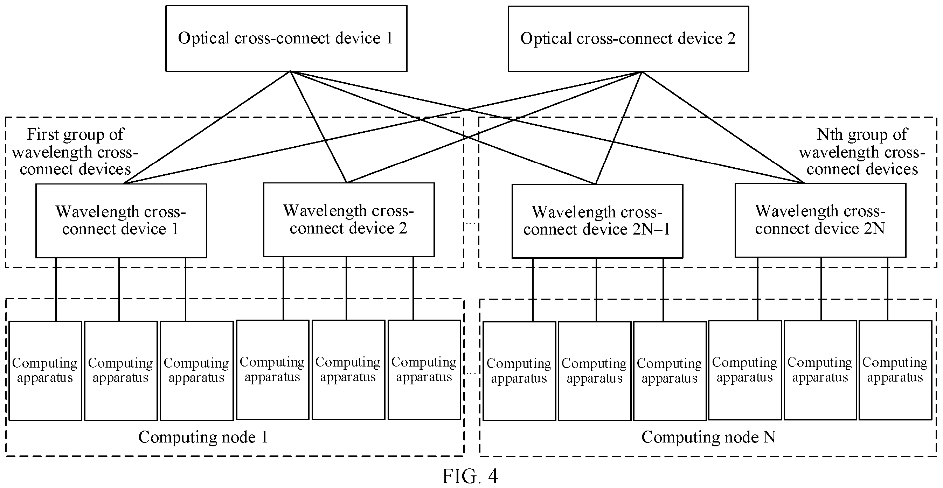

Optionally, to improve reliability of data communication, a plurality of optical cross-connect devices may be set in the computing cluster, and the wavelength cross-connect devices in the computing cluster all access the plurality of optical cross-connect devices. In this way, when one of the optical cross-connect devices is faulty or needs to be maintained, optical signal transmission may be implemented between the wavelength cross-connect devices via another optical cross-connect device. For example, FIG. 4 is a diagram of a structure of another computing cluster according to an embodiment of this application. A difference between the embodiment shown in FIG. 4 and the embodiment shown in FIG. 3 lies in that, in FIG. 4, the computing cluster includes a plurality of optical cross-connect devices, and each wavelength cross-connect device in the computing cluster accesses the same plurality of optical cross-connect devices.

As shown in FIG. 4, each of N computing nodes in the computing cluster includes six computing apparatuses, and each computing node corresponds to two wavelength cross-connect devices. In addition, the wavelength cross-connect devices corresponding to each computing node both access an optical cross-connect device 1 and an optical cross-connect device 2. In other words, for any wavelength cross-connect device, the wavelength cross-connect device may be connected to any other wavelength cross-connect device via the optical cross-connect device 1, or the wavelength cross-connect device may be connected to any other wavelength cross-connect device via the optical cross-connect device 2. In this way, when the optical cross-connect device 1 is faulty, optical signal transmission may continue to be performed between the wavelength cross-connect devices via the optical cross-connect device 2. In the embodiments shown in FIG. 2 to FIG. 4, each wavelength cross-connect device in the computing cluster accesses one or more same optical cross-connect devices. In this way, when each wavelength cross-connect device accesses one or more same optical cross-connect devices, any wavelength cross-connect device can be connected to any other wavelength cross-connect device via the optical cross-connect device. In other words, any two wavelength cross-connect devices can be connected via a same optical cross-connect device, to ensure that data sent by any computing apparatus can reach another computing apparatus through a path of "wavelength cross-connect device-optical cross-connect device-wavelength cross-connect device".

In the foregoing descriptions of the foregoing embodiments, a plurality of computing apparatuses in one computing node belong to one physical device, in other words, one computing node includes one physical server. Optionally, when some computing nodes include a large quantity of computing apparatuses, one computing node may be divided into a plurality of child nodes, and each child node includes a plurality of computing apparatuses. This helps manage the large quantity of computing apparatuses and allocate tasks.

For example, in the computing cluster, the plurality of computing apparatuses in the first computing node may belong to a plurality of child nodes, and each child node corresponds to one wavelength cross-connect device. The plurality of computing apparatuses in the second computing node may also belong to a plurality of child nodes, and each child node corresponds to one wavelength cross-connect device. In addition, each child node in the first computing node and the second computing node may include one or more computing apparatuses. The child node may be a physical node, and may be specifically a physical server.

Generally, computing apparatuses that can be connected to one wavelength cross-connect device are limited. When a computing node includes a large quantity of computing apparatuses, the computing node is divided into a plurality of child nodes, so that the computing apparatuses in the computing node can be divided based on wavelength cross-connect devices connected to the computing apparatuses. This helps manage the plurality of computing apparatuses in the computing node.

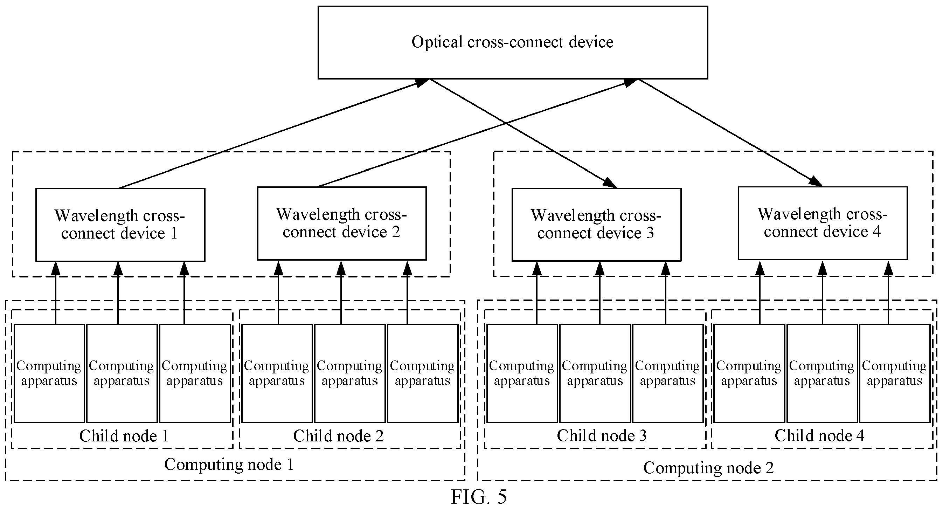

For example, FIG. 5 is a diagram of a structure of another computing cluster according to an embodiment of this application. A difference between the embodiment shown in FIG. 5 and the embodiment shown in FIG. 3 lies in that, in FIG. 5, a computing node in the computing cluster includes a plurality of child nodes, and each child node corresponds to one wavelength cross-connect device.

As shown in FIG. 5, the computing cluster includes a computing node 1 and a computing node 2, and the computing node 1 and the computing node 2 each include six computing apparatuses. In addition, the computing node 1 includes a child node 1 and a child node 2, and the child node 1 and the child node 2 each include three computing apparatuses. The computing node 1 includes a child node 3 and a child node 4, and the child node 3 and the child node 4 each include three computing apparatuses. Each child node in the computing node 1 and the computing node 2 is a physical server.

In FIG. 5, the three computing apparatuses in the child node 1 in the computing node 1 are connected to a wavelength cross-connect device 1, the three computing apparatuses in the child node 2 in the computing node 1 are connected to a wavelength cross-connect device 2, the three computing apparatuses in the child node 3 in the computing node 2 are connected to a wavelength cross-connect device 3, and the three computing apparatuses in the child node 4 in the computing node 2 are connected to a wavelength cross-connect device 4. In addition, the wavelength cross-connect device 1 to the wavelength cross-connect device 4 are all connected to a same optical cross-connect device.

In a configuration shown in FIG. 5, the three computing apparatuses in the child node 1 in the computing node 1 may exchange data with the three computing apparatuses in the child node 3 in the computing node 2 via the wavelength cross-connect device 1, the optical cross-connect device, and the wavelength cross-connect device 3, and the three computing apparatuses in the child node 2 in the computing node 1 may exchange data with the three computing apparatuses in the child node 4 in the computing node 2 via the wavelength cross-connect device 2, the optical cross-connect device, and the wavelength cross-connect device 4, so that a data exchange requirement in a distributed AI training scenario is met.

It should be noted that, in the embodiment shown in FIG. 5, the computing node 1 and the computing node 2 in the computing cluster each include a plurality of child nodes. In some possible embodiments, in the computing cluster, only a part of computing nodes include a plurality of child nodes, and the other part of the computing nodes include only one child node. In this way, when computing capabilities of the computing nodes in the computing cluster are uneven, for example, a part of the computing nodes include a large quantity of computing apparatuses, and the other part of the computing nodes include a small quantity of computing apparatuses, the computing nodes are divided into a plurality of child nodes, so that data exchange between the computing apparatuses can be implemented in a unit of child nodes. This helps flexibly configure a training task for each computing node in a complex training scenario, and improves solution flexibility.

In some AI training scenarios, computing apparatuses in various computing nodes are usually divided into computing apparatuses in a plurality of planes. Computing apparatuses in a same plane need to perform data exchange, and computing apparatuses in different planes usually do not need to perform data exchange. In other words, for a computing apparatus in a plane in a computing node, this part of computing apparatus usually communicates with only a specific part of computing apparatus (namely, a computing apparatus in the same plane) in another computing node. Therefore, in these AI training scenarios, it usually only needs to ensure that the computing apparatuses in the same plane can communicate with each other.

For example, in a possible implementation, each computing node in a computing cluster includes at least one child node, and different numbers are sequentially allocated to the child node in each computing node in a same order. For example, a number "1" is used as a start number for the child node in each computing node, and different numbers are sequentially allocated in ascending order. In this case, when the computing node includes M child nodes, numbers allocated to the M child nodes in the computing node are respectively 1, 2, 3, ..., and M.

In addition, wavelength cross-connect devices connected to child nodes with a same number in a plurality of computing nodes all access a same optical cross-connect device, and different child nodes are connected to different wavelength cross-connect devices. In other words, for child nodes in different computing nodes, child nodes with a same number may be considered as child nodes in a same plane. Therefore, wavelength cross-connect devices connected to computing apparatuses in the child nodes with the same number all access a same optical cross-connect device, so that computing apparatuses in the same plane can implement data exchange.

A first computing node and a second computing node in the computing cluster are used as an example. There are a plurality of optical cross-connect devices in the computing cluster. A plurality of computing apparatuses in the first computing node belong to a plurality of child nodes, and a plurality of computing apparatuses in the second computing node belong to a plurality of child nodes. Each child node may be specifically a physical server. In addition, the plurality of child nodes in the first computing node and the plurality of child nodes in the second computing node each have a number. Child nodes with a same number in the first computing node and the second computing node are connected to a same optical cross-connect device via wavelength cross-connect devices. For example, numbers allocated to M child nodes in the first computing node are respectively 1, 2, 3, ..., and M, and numbers allocated to M child nodes in the second computing node are also respectively 1, 2, 3, ..., and M. In this case, child nodes numbered 1 in the first computing node and the second computing node may access an optical cross-connect device 1, child nodes numbered 2 in the first computing node and the second computing node may access an optical cross-connect device 2, ..., and child nodes numbered M in the first computing node and the second computing node may access an optical cross-connect device M.

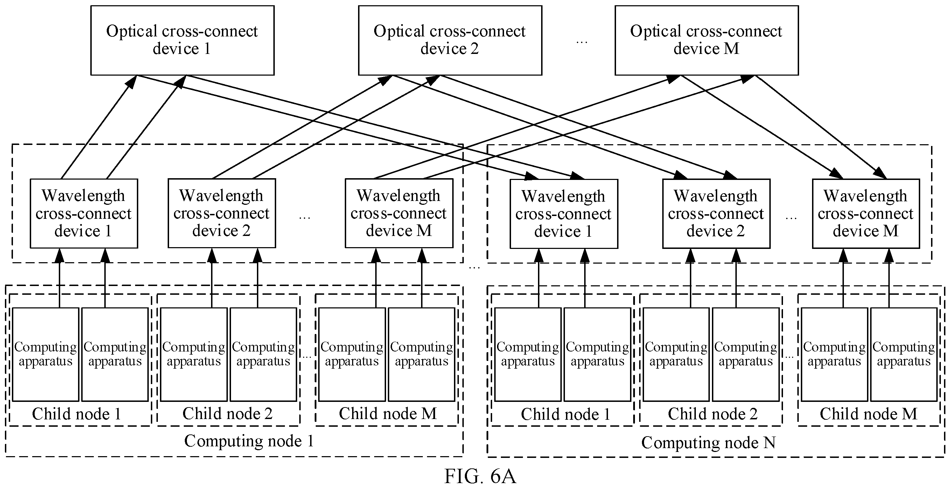

For example, FIG. 6A is a diagram of a structure of another computing cluster according to an embodiment of this application. A difference between the embodiment shown in FIG. 6A and the embodiments shown in FIG. 3 to FIG. 5 lies in that, in FIG. 6A, a computing node in a computing cluster includes a plurality of child nodes, and the plurality of child nodes in each computing node each have a corresponding number. Child nodes with a same number in different computing nodes access a same optical cross-connect device via wavelength cross-connect devices. One child node corresponds to one wavelength cross-connect device, and the child node may be specifically a physical server.

As shown in FIG. 6A, the computing cluster includes N computing nodes, which are respectively a computing node 1 to a computing node N. In the N computing nodes, each computing node includes M child nodes, and a number 1 to a number M are respectively allocated to the M child nodes in each computing node, in other words, each computing node includes a child node 1 to a child node M. In addition, a group of wavelength cross-connect devices corresponding to each computing node includes M wavelength cross-connect devices, and the number 1 to the number M are also allocated to the M wavelength cross-connect devices in each group of wavelength cross-connect devices. Computing apparatuses in each child node are all connected to one wavelength cross-connect device corresponding to a number. For the M wavelength cross-connect devices in each group of wavelength cross-connect devices, wavelength cross-connect devices with a same number are connected to a same optical cross-connect device. To be specific, the wavelength cross-connect device 1 is connected to an optical cross-connect device 1, the wavelength cross-connect device 2 is connected to an optical cross-connect device 2, ..., and the wavelength cross-connect device N is connected to an optical cross-connect device N.

In the computing cluster shown in FIG. 6A, computing apparatuses in child nodes with a same number in each computing node can implement communication via a same optical cross-connect device. For example, a computing apparatus in a child node 1 in the computing node 1 communicates with a computing apparatus in a child node 1 in the computing node N via a wavelength cross-connect device 1 in the first group of wavelength cross-connect devices, an optical cross-connect device, and a wavelength cross-connect device 1 in the Nth group of wavelength cross-connect devices. However, computing apparatuses in child nodes with different numbers in each computing node do not need to implement communication via an optical cross-connect device.

In this solution, each computing node is divided into the plurality of child nodes, and the child nodes in each computing node are numbered in a same numbering order, so that the computing apparatuses in the child nodes with the same number all can access the same optical cross-connect device via wavelength cross-connect devices, and mutual communication between the child nodes with the same number in each computing node is implemented, thereby meeting a requirement of an AI training scenario.

In the embodiment shown in FIG. 6A, the child nodes in each computing node are numbered, so that the child nodes with the same number access the same optical cross-connect device. In some embodiments, computing apparatuses in each computing node may be numbered, so that computing apparatuses with a same number access a same optical cross-connect device.

Specifically, in the embodiment shown in FIG. 6A, one wavelength cross-connect device accesses a plurality of ports in one optical cross-connect device. When the computing cluster is larger, a quantity of wavelength cross-connect devices may be large. Because a quantity of ports in an optical cross-connect device is limited, the optical cross-connect device may not provide robust ports for wavelength cross-connect devices to access. In this case, one wavelength cross-connect device may access only one port in the optical cross-connect device.

A first computing node and a second computing node in the computing cluster are used as an example. A plurality of computing apparatuses in the first computing node and a plurality of computing apparatuses in the second computing node each have a number, and computing apparatuses with a same number in the first computing node and the second computing node are connected to a same optical cross-connect device via wavelength cross-connect devices.

Generally, for each computing node in the computing cluster, different numbers may be sequentially allocated to the plurality of computing apparatuses in each computing node in a same order. In addition, computing apparatuses with a same number in different computing nodes may access a same optical cross-connect device via wavelength cross-connect devices.

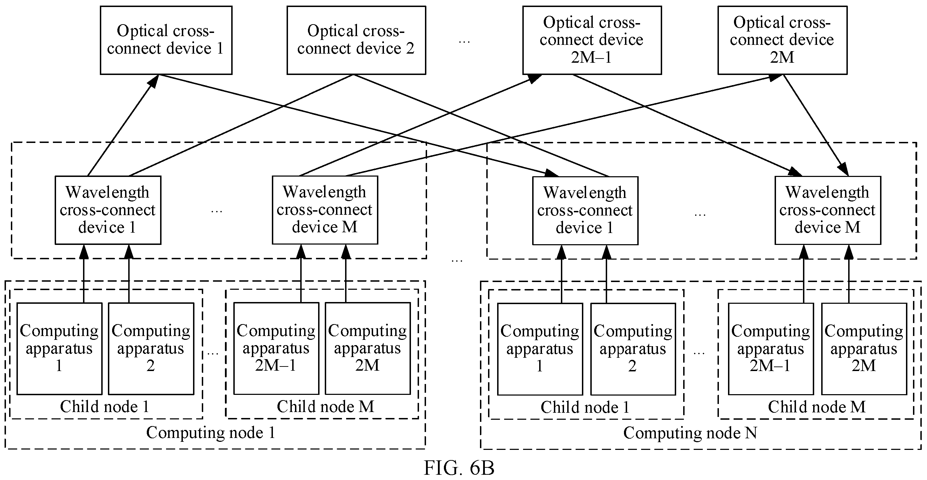

For example, FIG. 6B is a diagram of a structure of another computing cluster according to an embodiment of this application. A difference between the embodiment shown in FIG. 6A and the embodiment shown in FIG. 6A lies in that, in FIG. 6B, each computing node in the computing cluster includes a plurality of computing apparatuses, and the plurality of computing apparatuses in each computing node each have a corresponding number. Computing apparatuses with a same number in different computing nodes access a same optical cross-connect device via wavelength cross-connect devices.

As shown in FIG. 6B, the computing cluster includes N computing nodes, which are respectively a computing node 1 to a computing node N. In the N computing nodes, each computing node includes M child nodes, and each child node includes two computing apparatuses, that is, each computing node includes 2M computing apparatuses. A number 1 to a number 2M are respectively allocated to the 2M computing apparatuses in each computing node, in other words, each computing node includes a computing apparatus 1 to a computing apparatus 2M. In addition, the computing cluster includes 2M optical cross-connect devices (to be specific, an optical cross-connect device 1 to an optical cross-connect device 2M). The computing apparatuses with the same number in the different computing nodes access the same optical cross-connect device via the corresponding wavelength cross-connect devices. To be specific, the computing apparatus 1 accesses the optical cross-connect device 1, the computing apparatus 2 accesses the optical cross-connect device 2, ..., and the computing apparatus 2M accesses the optical cross-connect device 2M.

In the computing cluster shown in FIG. 6A, computing apparatuses with a same number in each computing node can implement communication via a same optical cross-connect device. For example, a computing apparatus in a child node 1 in the computing node 1 communicates with a computing apparatus in a child node 1 in the computing node N via a wavelength cross-connect device 1 in the first group of wavelength cross-connect devices, an optical cross-connect device, and a wavelength cross-connect device 1 in the Nth group of wavelength cross-connect devices. However, computing apparatuses in child nodes with different numbers in each computing node do not need to implement communication via an optical cross-connect device.

In this solution, the plurality of computing apparatuses in each computing node are numbered in a same numbering order, so that the computing apparatuses with the same number in the different computing nodes all can access the same optical cross-connect device via the wavelength cross-connect devices, and mutual communication between the computing apparatuses with the same number in each computing node is implemented, thereby meeting a requirement of an AI training scenario.

Optionally, to implement communication between different child nodes in a same computing node, in the same computing node, computing apparatuses in the different child nodes are further connected to each other via a wavelength cross-connect device. Alternatively, in the same computing node, the computing apparatuses in the different child nodes are electrically connected to each other. For example, the computing apparatuses in the child nodes are connected to each other by using an interconnection chip.

In this solution, the different child nodes in the same computing node communicate with each other via the wavelength cross-connect device or an electrical connection, to ensure that data exchange can be implemented between all child nodes in the computing cluster, thereby meeting a requirement of an AI training scenario.

The foregoing describes the structure of the computing cluster provided in embodiments of this application. For ease of understanding, the following describes specific structures and working principles of the wavelength cross-connect device and the optical cross-connect device in the computing cluster.

First, the wavelength cross-connect device is introduced. In a computing cluster, each wavelength cross-connect device includes a transmit end and a receive end. The transmit end is configured to send an optical signal to an optical cross-connect device, and the receive end receives the optical signal forwarded by the optical cross-connect device. Specifically, the transmit end of the wavelength cross-connect device includes a plurality of lasers, a plurality of first optical switches, and a plurality of aggregators. The plurality of lasers are in one-to-one correspondence with the plurality of first optical switches, and each laser is connected to a corresponding first optical switch. Each first optical switch is further connected to the plurality of aggregators.

In a working process of the transmit end of the wavelength cross-connect device, the plurality of lasers are respectively configured to generate optical signals of different wavelengths to carry data sent by different computing apparatuses. In other words, wavelengths of optical signals generated by the lasers are all different. Each of the plurality of first optical switches is configured to switch an optical signal generated by a corresponding laser to any one of the plurality of aggregators. In other words, each first optical switch receives an optical signal of a specific wavelength from a fixed laser. Any first optical switch is adjusted, so that an optical signal of a specific wavelength received by the first optical switch can be sent to any aggregator. The plurality of first optical switches are, for example, optical switches at a submicrosecond level, in other words, switching time of the first optical switch is at the submicrosecond level. In addition, at the transmit end of the wavelength cross-connect device, the plurality of aggregators respectively correspond to a plurality of ports in the optical cross-connect device, in other words, each aggregator is connected to one port in the optical cross-connect device. The plurality of aggregators are respectively configured to aggregate one or more optical signals obtained from the plurality of first optical switches, and send an aggregated optical signal to different ports in the optical cross-connect device. Because each first optical switch can send an optical signal to any aggregator, one aggregator may receive an optical signal sent by one or more first optical switches. When only one optical signal is received, the aggregator sends the optical signal to a corresponding port in the optical cross-connect device. When a plurality of optical signals are received, the aggregator aggregates the plurality of optical signals and sends an aggregated optical signal to a corresponding port in the optical cross-connect device.

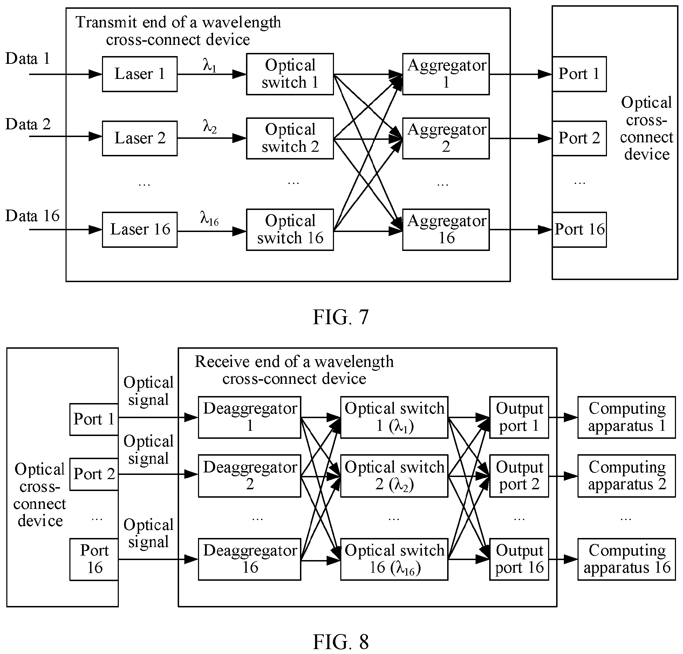

For example, FIG. 7 is a diagram of a structure of a transmit end of a wavelength cross-connect device according to an embodiment of this application. As shown in FIG. 7, the wavelength cross-connect device includes 16 lasers (to be specific, a laser 1 to a laser 16), 16 first optical switches (to be specific, an optical switch 1 to an optical switch 16), and 16 aggregators (to be specific, an aggregator 1 to an aggregator 16) in total. The 16 lasers are respectively configured to: obtain data sent by different computing apparatuses, and generate optical signals of different wavelengths to carry the obtained data. For example, in FIG. 7, a wavelength of an optical signal generated by the laser 1 is λ₁, a wavelength of an optical signal generated by the laser 1 is λ₂, ..., and a wavelength of an optical signal generated by the laser 16 is λ₁₆. The 16 first optical switches respectively receive optical signals from corresponding lasers, and can send the received optical signals to any one of the 16 aggregators. The 16 aggregators are respectively connected to 16 ports in an optical cross-connect device, and are configured to: aggregate the received optical signals and send an aggregated optical signal to corresponding ports.

Optionally, a plurality of target computing apparatuses connected to each wavelength cross-connect device are in one-to-one correspondence with a plurality of first optical switches, and each of the plurality of target computing apparatuses is connected to a corresponding first optical switch, to control the first optical switch to select an aggregator to which the first optical switch needs to switch. In addition, the plurality of target computing apparatuses connected to each wavelength cross-connect device are further in one-to-one correspondence with the plurality of lasers, and each target computing apparatus is connected to a corresponding laser. In other words, the target computing apparatus, the laser, and the first optical switch are in one-to-one correspondence. The laser is configured to generate an optical signal of a specific wavelength to carry data sent by the target computing apparatus. The target computing apparatus is configured to control the first optical switch to send, to a specific aggregator, the optical signal generated by the laser.

In this solution, the computing apparatus connected to the wavelength cross-connect device controls an aggregator to which the first optical switch switches, so that the computing apparatus can control a specific port that is in the optical cross-connect device and to which the optical signal is sent, and the computing apparatus can quickly switch another computing apparatus with which communication needs to be performed.

Specifically, a receive end of the wavelength cross-connect device includes a plurality of deaggregators and a plurality of second optical switches. The plurality of deaggregators are configured to: split an optical signal received from the optical cross-connect device into optical signals of different wavelengths, and respectively send the optical signals of different wavelengths to different second optical switches. The plurality of second optical switches are respectively configured to output the optical signals received from the plurality of deaggregators to any one of the plurality of target computing apparatuses connected to each wavelength cross-connect device.

In other words, for any deaggregator, an optical signal received by the deaggregator from the optical cross-connect device may be an aggregated optical signal (namely, an optical signal obtained by aggregating an optical signal of one or more wavelengths). Therefore, the deaggregator can split the aggregated optical signal into the optical signal of one or more wavelengths that exists before aggregation. In addition, each of the plurality of second optical switches corresponds to an optical signal of a wavelength, in other words, each second optical switch receives only an optical signal of a specific wavelength. In this way, after obtaining the optical signals of different wavelengths through splitting, the deaggregators respectively send the optical signals of various wavelengths to the corresponding second optical switches. Finally, the second optical switches can send the received optical signals to any output port, to output the optical signals to any computing apparatus connected to the wavelength cross-connect device.

For example, FIG. 8 is a diagram of a structure of a receive end of a wavelength cross-connect device according to an embodiment of this application. As shown in FIG. 8, the wavelength cross-connect device includes 16 deaggregators (to be specific, a deaggregator 1 to a deaggregator 16), 16 second optical switches (to be specific, an optical switch 1 to an optical switch 16), and 16 output ports (to be specific, an output port 1 to an output port 16) in total. The 16 deaggregators are respectively configured to: obtain optical signals sent by different ports (to be specific, a port 1 to a port 16) in an optical cross-connect device, and split the received optical signals into optical signals of different wavelengths. Then, the deaggregators send, to corresponding second optical switches based on the wavelengths of the optical signals obtained through splitting, the optical signals obtained through splitting. Each second optical switch is responsible for receiving only an optical signal of a specific wavelength, and different second optical switches are responsible for receiving optical signals of different wavelengths. For example, in FIG. 8, the optical switch 1 is responsible for receiving an optical signal of a wavelength λ₁, the optical switch 2 is responsible for receiving an optical signal of a wavelength λ₂, ..., and the optical switch 16 is responsible for receiving an optical signal of a wavelength λ₁₆. The 16 second optical switches respectively receive optical signals of specific wavelengths from corresponding deaggregators, and send the received optical signals to any one of the 16 output ports. The 16 output ports are respectively connected to different computing apparatuses (to be specific, a computing apparatus 1 to a computing apparatus 16). Therefore, an output port used by an optical switch to forward an optical signal is controlled, so that the optical switch can be controlled to forward the optical signal to any computing apparatus.

Optionally, for a plurality of target computing apparatuses connected to the wavelength cross-connect device, the plurality of target computing apparatuses are all connected to a plurality of second optical switches, and are configured to control any one of the plurality of second optical switches to select a computing apparatus for output. In other words, for any computing apparatus connected to the wavelength cross-connect device, the computing apparatus is connected to the plurality of second optical switches, and can control any second optical switch to output an optical signal to the computing apparatus.

In this solution, the computing apparatus connected to the wavelength cross-connect device is set to control the second optical switch at the receive end of the wavelength cross-connect device, so that any computing apparatus can obtain an optical signal received by the wavelength cross-connect device from any port, and communication flexibility between computing apparatuses is ensured.

For example, when a first computing apparatus in a first computing node is connected to a second computing apparatus in a second computing node, and when the first computing apparatus in the first computing node needs to be connected to a third computing apparatus in the second computing node, a target wavelength cross-connect device that connects both the second computing apparatus and the third computing apparatus may switch a connection between the first computing apparatus and the second computing apparatus to a connection between the first computing apparatus and the third computing apparatus. Specifically, the third computing apparatus may send a request to the target wavelength cross-connect device. After receiving the request, the target wavelength cross-connect device switches, based on the request, the optical switch to an output port connected to the third computing apparatus, so that an input port connected to the first computing apparatus is connected to the output port connected to the third computing apparatus. In this way, an optical signal sent by the first computing apparatus to the target wavelength cross-connect device may be forwarded to the third computing apparatus.

Optionally, each of the plurality of second optical switches can be simultaneously controlled by only one computing apparatus. For example, a computing apparatus may control, by sending a configuration instruction to a second optical switch, an output port to which the second optical switch switches, and the configuration instruction sent by the computing apparatus carries identity information of the computing apparatus. After a second optical switch receives a configuration instruction of a computing apparatus and switches to a specific output port based on the configuration instruction, the second optical switch confirms, when receiving a new configuration instruction, identity information carried in the new configuration instruction. If the identity information carried in the new configuration instruction is different from identity information carried in the old configuration instruction (namely, the configuration instruction executed by the second optical switch), the second optical switch refuses to execute the new configuration instruction until the computing apparatus that first controls the second optical switch notifies to terminate configuration of the second optical switch.

Simply, after a second optical switch is configured by a computing apparatus, the second optical switch can continue to be configured by only the same computing apparatus subsequently, and the second optical switch cannot be configured by another second optical switch until the computing apparatus cancels configuration of the second optical switch.

It should be understood that any second optical switch can be controlled by any computing apparatus connected to the wavelength cross-connect device. Therefore, to avoid a case in which a plurality of computing apparatuses configure the second optical switch by mistake, in this solution, it is set that each second optical switch can be simultaneously controlled by only one computing apparatus, to ensure that the plurality of computing apparatuses do not simultaneously configure the same second optical switch.

The foregoing describes the specific structure of the wavelength cross-connect device, and the following describes the structure of the optical cross-connect device.

The optical cross-connect device may include but is not limited to a micro-electro-mechanical system (micro-electro-mechanical system, MEMS)-based optical switching device and a silicon photonics (silicon photonics, SiP)-based optical switching device.

An MEMS is a micron-sized mechanical system. A machining technology of the MEMS is transformed from a semiconductor machining technology, and an operation range is at a micron level. The MEMS-based optical switching device means that, in the optical cross-connect device, an optical switch is an array including reflectors that are manufactured by using an MEMS process and that can deflect based on an external instruction. The optical switch is configured to reflect an incident light beam to a specific direction.

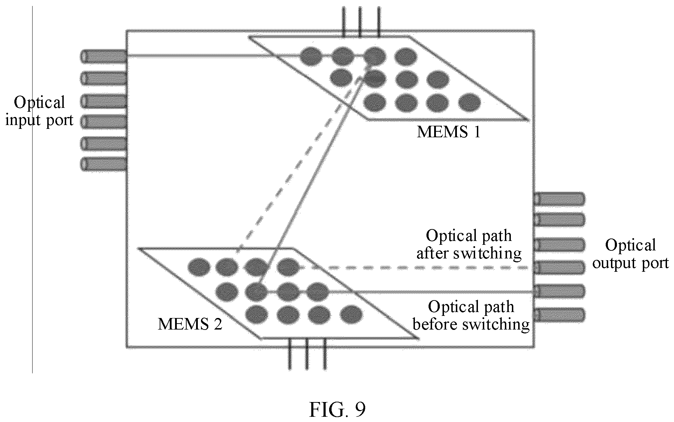

For example, FIG. 9 is a diagram of a structure of an MEMS-based optical switching device according to an embodiment of this application. As shown in FIG. 9, the MEMS-based optical switching device includes a plurality of optical input ports, two MEMSs (to be specific, an MEMS 1 and an MEMS 2), and a plurality of optical output ports. The plurality of optical input ports may be respectively connected to ports at a transmit end of a wavelength cross-connect device, and are respectively configured to receive optical signals sent by the transmit end of the wavelength cross-connect device. The two MEMSs are configured to propagate the optical signal received by the optical input ports, to forward the optical signal to a specific optical output port. The plurality of output ports may be respectively connected to ports at a receive end of the wavelength cross-connect device, and are configured to output the optical signal to the receive end of the wavelength cross-connect device. The two MEMSs can reflect the optical signal received by the optical input port, and reflect the optical signal to the specific optical output port. In addition, the MEMSs are adjusted, so that a reflection direction of the optical signal can be changed, thereby changing an optical output port for outputting the optical signal. As shown in FIG. 9, before optical path switching, an optical signal input by the first optical input port is propagated to a reflector of the MEMS 1, is reflected to a reflector of the MEMS 2 by the reflector of the MEMS 1, and finally is reflected to the penultimate optical output port by the reflector of the MEMS 2. In an optical path switching process, a reflection angle of the reflector of the MEMS 1 is adjusted, so that the optical signal can be reflected to another reflector of the MEMS 2, thereby changing an optical output port for outputting the optical signal. Specifically, after the optical path switching, the optical signal input by the first optical input port is reflected to the antepenultimate optical output port by the reflectors of the MEMS 1 and the MEMS 2. For the MEMS-based optical switching device, an optical signal received by one optical input port can be output from only one optical output port. Therefore, the MEMS-based optical switching device is applicable to point-to-point connection between two nodes. In addition, when adjusting an optical path of an optical signal, the MEMS-based optical switching device needs to adjust a reflection angle of a reflector. Therefore, an optical path switching speed of the MEMS-based optical switching device is low, and millisecond-level switching time is usually required. However, the MEMS-based optical switching device has a large quantity of optical input ports and optical output ports, and usually can include thousands of optical input ports and optical output ports, in other words, the MEMS-based optical switching device supports simultaneous forwarding of 1000 optical signals.

It can be learned from the foregoing structures of the wavelength cross-connect device and the MEMS-based optical switching device that the wavelength cross-connect device can support fast switching of an optical path of an optical signal, but an optical path scale supported by the wavelength cross-connect device is smaller. However, an optical path scale supported by the MEMS-based optical switching device is larger, but the optical path switching speed is lower and flexibility is poorer. Therefore, in the embodiments, the wavelength cross-connect device and the MEMS-based optical switching device are combined in the computing cluster. The wavelength cross-connect device is responsible for fast and flexible optical path switching, and helps each computing apparatus quickly switch a communication destination. The MEMS-based optical switching device is responsible for establishing a large quantity of physical optical paths. In this way, flexibility and large-scale networking are simultaneously ensured.

In addition, the silicon photonics-based optical switching device means that a silicon wafer is used as an optical conduction medium in the optical cross-connect device. Different from the MEMS, the silicon chip simultaneously implements light beam propagation and direction maintenance through a waveguide channel, and can provide a higher channel switching speed than that of the MEMS.

The foregoing describes the structures of the wavelength cross-connect device and the optical cross-connect device provided in embodiments of this application. The following describes in detail a process of configuring the wavelength cross-connect device and the optical cross-connect device with reference to specific networking examples.

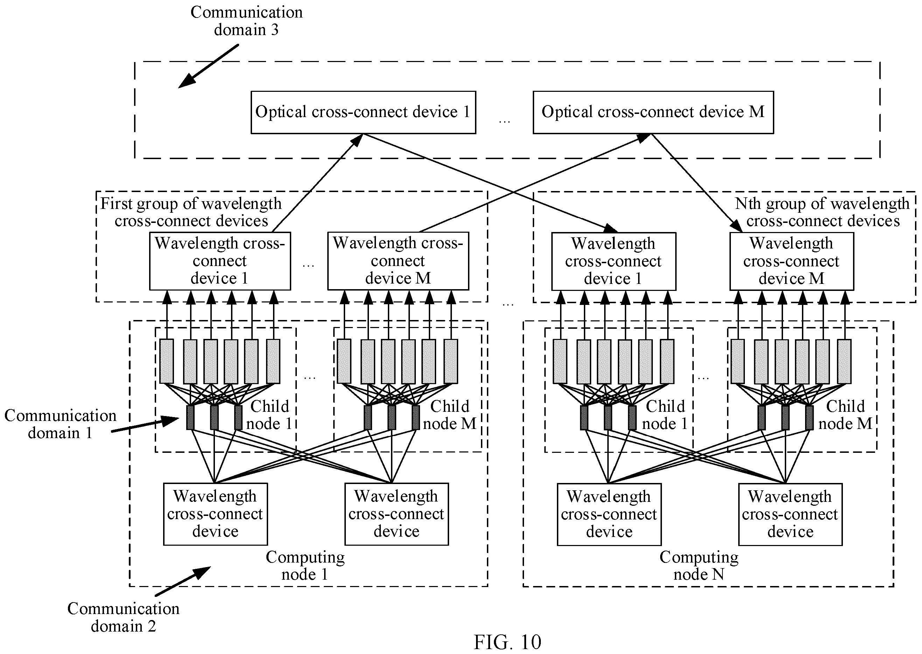

FIG. 10 is a schematic networking diagram of a computing cluster according to an embodiment of this application. As shown in FIG. 10, the computing cluster includes N computing nodes, N groups of wavelength cross-connect devices, and M optical cross-connect devices, where each computing node includes M child nodes, and each child node includes X computing apparatuses. In addition, the X computing apparatuses in each child node are connected to each other by using a plurality of interconnection chips, and interconnection chips in M child nodes in a same computing node may be connected to each other via a wavelength cross-connect device. The computing apparatus is, for example, a graphics processing unit (graphics processing unit, GPU) or a neural-network processing unit (neural-network processing unit, NPU).

In computing cluster networking shown in FIG. 10, the computing cluster may be divided into three communication domains: a communication domain 1, a communication domain 2, and a communication domain 3.

### 1. Communication domain 1

The communication domain 1 is a communication domain including a plurality of computing apparatuses in a same child node. In the communication domain 1, the plurality of computing apparatuses in the same child node are connected to each other by using one or more interconnection chips. When the computing apparatuses are GPUs or NPUs, the plurality of computing apparatuses in the same child node may be managed by a same operating system, so that mutual communication is implemented in the communication domain 1 by using the interconnection chip. For example, a data transmission distance between the plurality of computing apparatuses in the same child node may be within one meter.

### 2. Communication domain 2

The communication domain 2 is a communication domain including a plurality of child nodes in a same computing node. For the same computing node, the child nodes may be connected via a wavelength cross-connect device or an interconnection chip. A wavelength cross-connect device is used as an example. One or more wavelength cross-connect devices are set in the same computing node, and interconnection chips that are in each child node and that are configured to connect a plurality of computing apparatuses are connected to the one or more wavelength cross-connect devices. In other words, interconnection chips in different child nodes are connected via one or more wavelength cross-connect devices, so that communication between computing apparatuses in different child nodes in a same computing node is ensured. For example, a data transmission distance between the computing apparatuses in the different child nodes in the same computing node may be within 10 meters.

### 3. Communication domain 3

The communication domain 3 is a communication domain including a plurality of computing nodes. For any one of the plurality of computing nodes, each computing apparatus in the computing node is connected to a wavelength cross-connect device, and the wavelength cross-connect device connected to each computing apparatus is connected to an optical cross-connect device. Therefore, computing apparatuses in different computing nodes can implement communication connection via a wavelength cross-connect device and an optical cross-connect device between the computing apparatuses. Specifically, each computing apparatus in the computing node may be connected to the wavelength cross-connect device by using a network interface card. An example in which the computing apparatus in the computing node is an NPU is used. One NPU may correspond to one or two network interface cards, and each network interface card is connected to one port in the wavelength cross-connect device. Therefore, the NPU may transmit one or two channels of data to the wavelength cross-connect device by using the connected one or two network interface cards. When one NPU corresponds to one network interface card and one wavelength cross-connect device corresponds to one child node, a quantity of ports in the wavelength cross-connect device is equal to a quantity of NPUs in the child node, and a quantity of wavelength cross-connect devices is equal to a quantity of child nodes in the computing cluster.

Based on the foregoing three communication domains, the process of configuring the wavelength cross-connect device and the optical cross-connect device mainly includes two procedures. The first procedure is to configure the optical cross-connect device based on an AI task executed by each computing node or a communication requirement of a tenant, so that a physical optical path between computing nodes on which communication needs to be performed is configured. A second procedure is to configure an optical switch in the wavelength cross-connect device based on a requirement of a computing apparatus in a communication process when the computing apparatus needs to switch a communication destination, so that the communication destination of the computing apparatus is switched.

For example, the optical cross-connect device may be connected to a software defined network (Software Defined Network, SDN) controller, and the SDN controller is configured to configure, on the optical cross-connect device, an optical path between to-be-communicated wavelength cross-connect devices.

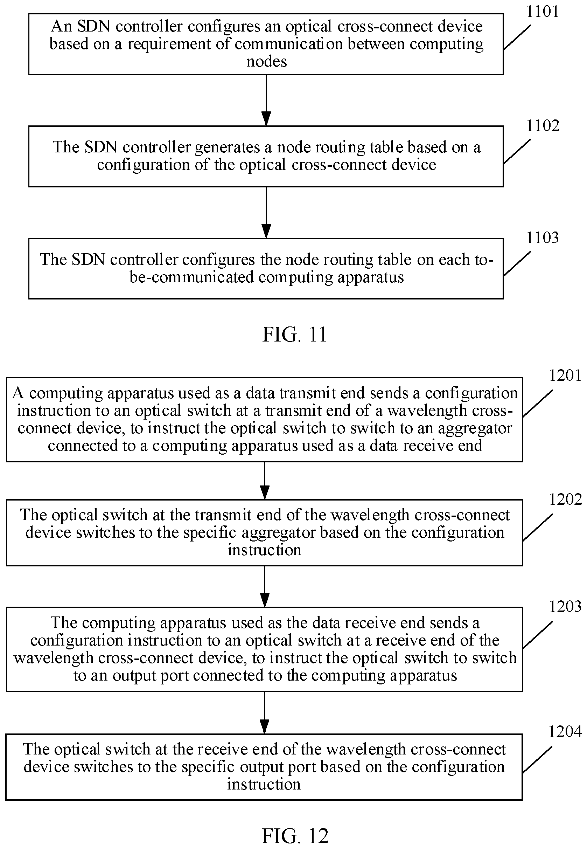

FIG. 11 is a schematic flowchart of configuring an optical cross-connect device by an SDN controller according to an embodiment of this application. As shown in FIG. 11, a procedure of configuring the optical cross-connect device by the SDN controller includes step 1101 to step 1103.

Step 1101: The SDN controller configures the optical cross-connect device based on a requirement of communication between computing nodes.

In this embodiment, the requirement of the communication between the computing nodes may be determined based on a specific task executed by computing nodes that participate in an AI training task. For example, when a computing node 1 to a computing node 4 participate in the AI training task, the computing node 1 needs to exchange training data with the computing node 3, and the computing node 2 needs to exchange training data with the computing node 4. In this case, a communication requirement of the computing node 1 to the computing node 4 is that the computing node 1 needs to communicate with the computing node 3, and the computing node 2 needs to communicate with the computing node 4. When a tenant rents a plurality of computing nodes in a computing cluster, the requirement of the communication between the computing nodes may alternatively be determined based on a communication requirement of the tenant for the rented computing nodes. For example, the tenant simultaneously rents a computing node 1, a computing node 5, and a computing node 8, and the tenant expects that data exchange can be implemented between the computing node 5 and the computing node 8. In this case, the communication requirement is that the computing node 5 needs to communicate with the computing node 8.

Because a port that is in the optical cross-connect device and that is connected to a wavelength cross-connect device connected to each computing node is usually fixed, the SDN controller may configure, based on the requirement of the communication between the computing nodes, a physical optical path between wavelength cross-connect devices connected to computing nodes on which communication needs to be performed, to configure the optical cross-connect device. For example, assuming that the communication requirement is that the computing node 1 needs to communicate with the computing node 3, a wavelength cross-connect device connected to the computing node 1 accesses a port 1 in the optical cross-connect device, and a wavelength cross-connect device connected to the computing node 3 accesses a port 13 in the optical cross-connect device, the SDN controller may configure the optical cross-connect device to establish a physical optical path between the port 1 and the port 13.

Step 1102: The SDN controller generates a routing table based on a configuration of the optical cross-connect device. After the SDN controller configures the optical cross-connect device, the SDN controller may generate the routing table based on the configuration of the optical cross-connect device. The routing table records numbers of computing nodes configured with physical optical paths and numbers of input ports and output ports in wavelength cross-connect devices connected to the computing nodes. For example, the routing table may be shown as the following Table 1.

**Table 1**

| Source computing node | Destination computing node | Input port | Output port |
|---|---|---|---|
| Computing node 1 | Computing node 3 | Port 1 | Port 6 |
| Computing node 2 | Computing node 4 | Port 2 | Port 8 |
| Computing node 5 | Computing stage 5 | Port 5 | Port 10 |

In Table 1, the source computing node represents a computing node that needs to send data, the destination computing node represents a computing node that needs to receive the data, the input port represents a port that is in a wavelength cross-connect device connected to the source computing node and that accesses an optical cross-connect device, and the input port represents a port that is in a wavelength cross-connect device connected to the destination computing node and that accesses the optical cross-connect device. In other words, based on the routing table, specific ports that are in specific wavelength cross-connect devices and that are required for communication between two computing nodes may be determined.

Step 1103: The SDN controller configures the routing table on each to-be-communicated computing apparatus.

After obtaining the routing table, the SDN controller configures the routing table on all computing apparatuses in the source computing node and the destination computing node, so that the computing apparatus can determine a route to another computing apparatus with which communication needs to be performed. For example, when the computing apparatus is an NPU, the NPU usually has a configuration table rank_table, and the configuration table rank_table is usually used to record a number status of a local NPU. Therefore, the routing table may be added to the configuration table rank_table, so that the routing table is configured on the NPU.

It should be noted that, because a quantity of ports in a wavelength cross-connect device is limited, a computing apparatus in the source computing node may not be able to directly communicate with a computing apparatus in the destination computing node via the connected wavelength cross-connect device. In other words, the computing apparatus in the source computing node may further need to communicate with another computing apparatus in the same computing node, to implement communication with the computing apparatus in the destination computing node. In this case, a number of a wavelength cross-connect device (namely, a wavelength cross-connect device between child nodes) between to-be-communicated computing apparatuses in the same computing node may be further added to the routing table, so that the computing apparatuses in the same computing node can communicate via the wavelength cross-connect device between the computing apparatuses.

In other words, for any computing apparatus in the computing cluster, if a wavelength cross-connect device connected to the computing apparatus is configured by the SDN controller to be connected to another wavelength cross-connect device via an optical cross-connect device, the SDN controller may configure the routing table for the computing apparatus, where the routing table indicates a connection relationship between the wavelength cross-connect device connected to the computing apparatus and another computing apparatus.

Specifically, the routing table may include the source computing node, the destination computing node, an output port (namely, an input port in the optical cross-connect device) that is in a wavelength cross-connect device at a transmit end and that is connected to the optical cross-connect device, and an input port (namely, an output port in the optical cross-connect device) that is in a wavelength cross-connect device at a receive end and that is connected to the optical cross-connect device. In other words, for any computing apparatus in the computing cluster, the computing apparatus can determine, based on the routing table, the connection relationship between the wavelength cross-connect device connected to the computing apparatus and the another computing apparatus in another computing node, and can send a corresponding request to the wavelength cross-connect device to switch a connection when a communication object needs to be switched.

For example, when a first computing apparatus in a first computing node is connected to a second computing apparatus in a second computing node, and the second computing apparatus and a third computing apparatus in the second computing node both access a target wavelength cross-connect device, when the first computing apparatus in the first computing node needs to be connected to the third computing apparatus in the second computing node, the third computing apparatus may determine, based on a configured routing table, a port through which the target wavelength cross-connect device is connected to the first computing apparatus in the computing node, in other words, determine an input port connected to the first computing apparatus and an output port connected to the third computing apparatus that are in the target wavelength cross-connect device. Therefore, the third computing apparatus may send a request to the target wavelength cross-connect device based on the routing table, so that the target wavelength cross-connect device connects the input port connected to the first computing apparatus to the output port connected to the third computing apparatus, and a connection between the first computing apparatus and the third computing apparatus is implemented.

FIG. 12 is a schematic flowchart of configuring a wavelength cross-connect device according to an embodiment of this application. As shown in FIG. 12, a procedure of configuring the wavelength cross-connect device includes step 1201 to step 1204.

Step 1201: A computing apparatus used as a data transmit end sends a configuration instruction to an optical switch at a transmit end of the wavelength cross-connect device, to instruct the optical switch to switch to an aggregator connected to a computing apparatus used as a data receive end.

Each laser and each optical switch at the transmit end of the wavelength cross-connect device have a corresponding computing apparatus. Therefore, the computing apparatus used as the data transmit end may send the configuration instruction to the corresponding optical switch based on a configured routing table, to instruct the optical switch to switch to the aggregator connected to the computing apparatus used as the data receive end.

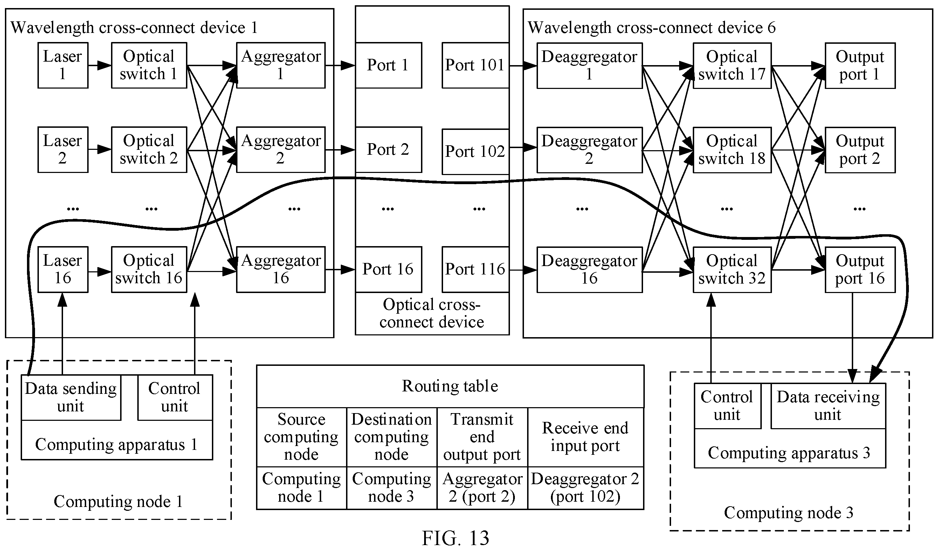

For example, FIG. 13 is a diagram of a structure of a configured wavelength cross-connect device according to an embodiment of this application. As shown in FIG. 13, in a routing table 1, a source computing node is a computing node 1, a destination computing node is a computing node 3, an input port is a port (namely, a port 2 in an optical cross-connect device) corresponding to an aggregator 2 in a wavelength cross-connect device 1, and an output port (namely, a port 102 in the optical cross-connect device) is a port corresponding to a deaggregator 2 in a wavelength cross-connect device 6. For a computing apparatus 1 in the computing node 1, the computing apparatus 1 corresponds to an optical switch 16 in the wavelength cross-connect device 1, and the computing apparatus 1 needs to send a configuration instruction to the optical switch 16 in the wavelength cross-connect device 1, to instruct the optical switch 16 to switch to the aggregator 2.

Step 1202: The optical switch at the transmit end of the wavelength cross-connect device switches to the specific aggregator based on the configuration instruction.

Specifically, the configuration instruction sent by the computing apparatus may be transmitted, through a control bus, to an optical switching board corresponding to the wavelength cross-connect device, and written into the optical switch, so that the optical switch can switch to the specific aggregator based on the configuration instruction.

For example, in FIG. 13, after the optical switch 16 receives the configuration instruction sent by a control unit in the computing apparatus 1, the optical switch 16 switches to the aggregator 2.

Step 1203: The computing apparatus used as the data receive end sends a configuration instruction to an optical switch at a receive end of the wavelength cross-connect device, to instruct the optical switch to switch to an output port connected to the computing apparatus.

Similarly, the computing apparatus used as the data receive end can control any optical switch at the receive end of the wavelength cross-connect device. In addition, a wavelength of an optical signal received by each optical switch at the receive end of the wavelength cross-connect device is specific. Therefore, the computing apparatus used as the data transmit end may send the configuration instruction to the specific optical switch based on the configured routing table, to instruct the optical switch to switch to the aggregator connected to the computing apparatus used as the data receive end. Because the transmit end of the wavelength cross-connect device includes, in an optical signal of a specific wavelength, data sent by the data transmit end, the specific optical switch is an optical switch configured to receive the optical signal (namely, an optical signal carrying the data sent by the data transmit end) of the specific wavelength.

For example, as shown in FIG. 13, a computing apparatus 3 in the computing node 3 is used as the data receive end, and the computing apparatus 3 is connected to the wavelength cross-connect device 6. In addition, a wavelength of an optical signal received by an optical switch 32 in the wavelength cross-connect device 6 is the same as a wavelength of an optical signal sent by the optical switch 16 in the wavelength cross-connect device 1, that is, the optical switch 32 is configured to receive the optical signal sent by the optical switch 16. Therefore, a control unit in the computing apparatus 3 may send a configuration instruction to the optical switch 32 in the wavelength cross-connect device 6, to instruct the optical switch 32 to switch to an output port 16, namely, an output port connected to a data receiving unit in the computing apparatus 3.

Step 1204: The optical switch at the receive end of the wavelength cross-connect device switches to the specific output port based on the configuration instruction.

Specifically, the configuration instruction sent by the computing apparatus may be transmitted, through a control bus, to an optical switching board corresponding to the wavelength cross-connect device, and written into the optical switch, so that the optical switch can switch to the specific output port based on the configuration instruction.

As shown in FIG. 13, after the computing apparatus 1 controls the optical switch 16 to switch to the aggregator 2, and the computing apparatus 3 controls the optical switch 32 to switch to the output port 16, a data transmission path between the computing apparatus 1 and the computing apparatus 3 is specifically: computing apparatus 1->laser 16->optical switch 16->aggregator 2->port 2 in the optical cross-connect device->102 in the optical cross-connect device->deaggregator 2->optical switch 32->output port 16->computing apparatus 3.

After a physical optical path between the computing apparatus used as the data transmit end and the computing apparatus used as the data receive end is established, the two computing apparatuses may further establish a link at a protocol layer, to implement data exchange.

For ease of understanding, the following describes in detail a process in which a computing apparatus indicates, based on a configured routing table, a wavelength cross-connect device to switch a connection with reference to specific examples.

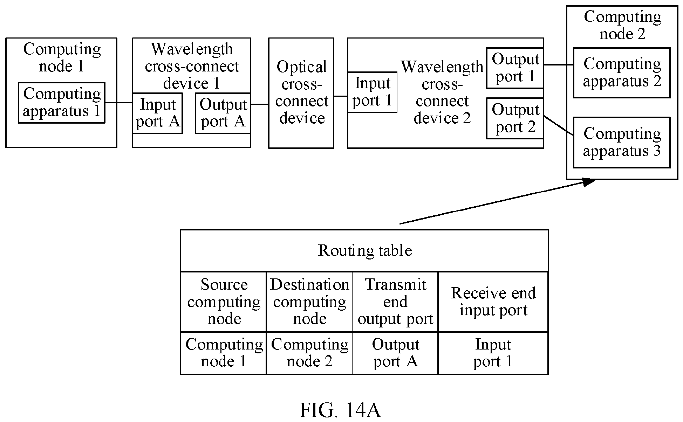

FIG. 14A is a schematic connection diagram of a computing cluster according to an embodiment of this application. As shown in FIG. 14A, the computing cluster includes a computing node 1 and a computing node 2, the computing node 1 includes a computing apparatus 1, and the computing node 2 includes a computing apparatus 2 and a computing apparatus 3. The computing apparatus 1 in the computing node 1 is connected to an input port A in a wavelength cross-connect device 1, the computing apparatus 2 in the computing node 2 is connected to an output port 1 in a wavelength cross-connect device 2, and the computing apparatus 3 in the computing node 2 is connected to an output port 2 in the wavelength cross-connect device 2. The wavelength cross-connect device 1 and the wavelength cross-connect device 2 are both connected to an optical cross-connect device. After configuring, on the optical cross-connect device, a connection between the wavelength cross-connect device 1 and the wavelength cross-connect device 2, an SDN controller may send routing table configuration requests to the computing apparatus 1 in the computing node 1 and the computing apparatus 2 and the computing apparatus 3 in the computing node 2, so that each computing apparatus generates a corresponding routing table. Specifically, the SDN controller configures an output port A in the wavelength cross-connect device 1 to be connected to an input port 1 in the wavelength cross-connect device 2.

Specifically, content recorded in routing tables generated by the computing apparatus 2 and the computing apparatus 3 includes: A source computing node is the computing node 1, a destination computing node is the computing node 2, a transmit end output port is the output port A in the wavelength cross-connect device 1, and a receive end input port is the input port 1 in the wavelength cross-connect device 2.

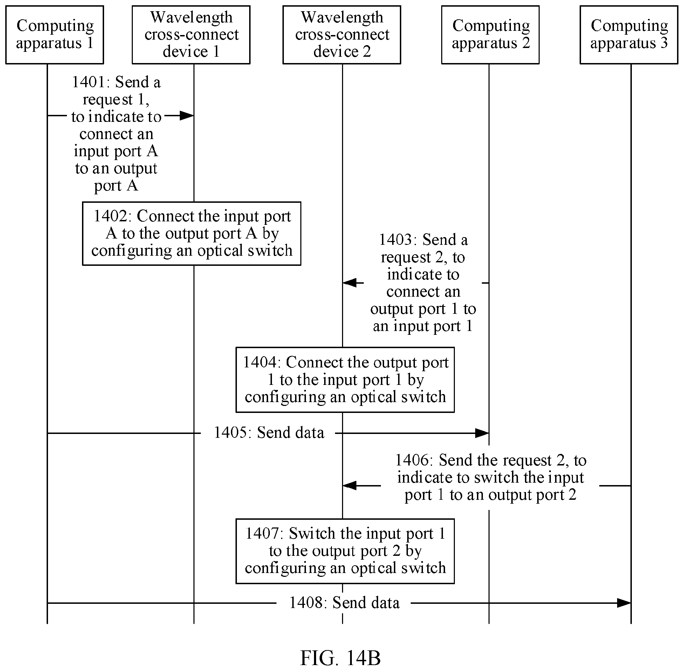

FIG. 14B is a schematic configuration flowchart of communication between computing apparatuses according to an embodiment of this application. As shown in FIG. 14B, based on the architecture shown in FIG. 14A, a configuration procedure in which the computing apparatus 1 communicates with the computing apparatus 2 and the computing apparatus 3 includes step 1401 to step 1408.

Step 1401: When the computing apparatus 1 needs to send data to the computing apparatus 2, the computing apparatus 1 sends a request 1 to the wavelength cross-connect device 1 based on a routing table, to indicate to connect the input port A connected to the computing apparatus 1 to the output port A connected to the optical cross-connect device. Because the routing table in the computing apparatus 1 indicates that the wavelength cross-connect device 1 is connected to the optical cross-connect device via the output port A, the computing apparatus 1 may send the request 1 to the wavelength cross-connect device 1, to indicate to connect the input port A connected to the computing apparatus 1 to the output port A connected to the optical cross-connect device.

Step 1402: The wavelength cross-connect device 1 connects, based on the received request 1, the input port A to the output port A by configuring an optical switch.

Specifically, the wavelength cross-connect device 1 may connect an optical switch connected to the input port A to the output port A, to implement a connection between the computing apparatus 1 and the optical cross-connect device. Step 1403: When the computing apparatus 2 needs to receive the data sent by the computing apparatus 1, the computing apparatus 2 sends a request 2 to the wavelength cross-connect device 2 based on the routing table, to indicate to connect the output port 1 connected to the computing apparatus 2 to the input port 1 connected to the optical cross-connect device.

Because the routing table in the computing apparatus 2 indicates that the wavelength cross-connect device 2 is connected to the optical cross-connect device via the input port 1, the computing apparatus 2 may send the request 2 to the wavelength cross-connect device 2, to indicate to connect the output port 1 connected to the computing apparatus 2 to the input port 1 connected to the optical cross-connect device.

Step 1404: The wavelength cross-connect device 2 connects, based on the received request 2, the output port 1 connected to the computing apparatus 2 to the input port 1 connected to the optical cross-connect device by configuring an optical switch.

Specifically, the wavelength cross-connect device 2 may connect an optical switch connected to the input port 1 to the output port 1, to implement a connection between the computing apparatus 2 and the optical cross-connect device. Step 1405: The computing apparatus 1 sends the data to the computing apparatus 2 via the wavelength cross-connect device 1, the optical cross-connect device, and the wavelength cross-connect device 2.

After the computing apparatus 1 and the computing apparatus 2 are both connected to the optical cross-connect device, the computing apparatus 1 may send the data to the computing apparatus 2 via the wavelength cross-connect device 1, the optical cross-connect device, and the wavelength cross-connect device 2.

Step 1406: After communication between the computing apparatus 1 and the computing apparatus 2 is completed, when the computing apparatus 1 needs to send data to the computing apparatus 3, the computing apparatus 3 sends a request 3 to the wavelength cross-connect device 2 based on the routing table, to indicate to switch the input port 1 connected to the optical cross-connect device to the output port 2 connected to the computing apparatus 3.

When the computing apparatus 1 needs to send the data to the computing apparatus 3, the wavelength cross-connect device 2 needs to switch a connection between the computing apparatus 1 and the computing apparatus 2 to a connection between the computing apparatus 1 and the computing apparatus 3. Therefore, the computing apparatus 3 may send the request 3 to the wavelength cross-connect device 2, to indicate to switch the input port 1 connected to the optical cross-connect device to the output port 2 connected to the computing apparatus 3.

In addition, before the computing apparatus 3 sends the request 3 to the wavelength cross-connect device 2, the computing apparatus 2 may first send a connection cancellation request to the wavelength cross-connect device 2, to indicate to cancel the connection between the computing apparatus 1 and the computing apparatus 2, in other words, indicate to disconnect the output port 1 and the input port 1.

Step 1407: The wavelength cross-connect device 2 switches, based on the received request 3, the input port 1 connected to the optical cross-connect device to the output port 2 connected to the computing apparatus 3 by configuring an optical switch.

Specifically, the wavelength cross-connect device 2 may connect an optical switch connected to the input port 2 to the output port 1, to implement a connection between the computing apparatus 3 and the optical cross-connect device. Step 1408: The computing apparatus 1 sends the data to the computing apparatus 3 via the wavelength cross-connect device 1, the optical cross-connect device, and the wavelength cross-connect device 2.

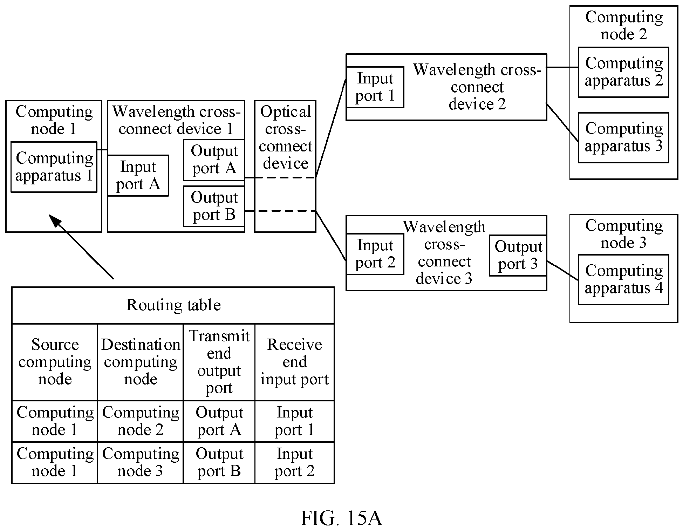

After connection switching succeeds, the computing apparatus 1 may send the data to the computing apparatus 3 via the wavelength cross-connect device 1, the optical cross-connect device, and the wavelength cross-connect device 2. FIG. 15A is a schematic connection diagram of another computing cluster according to an embodiment of this application. As shown in FIG. 15A, a wavelength cross-connect device 3 and a computing node 3 are added to the architecture shown in FIG. 14A. A computing apparatus 1 in a computing node 1 is connected to an input port A in a wavelength cross-connect device 1, an output port A in the wavelength cross-connect device 1 is connected to a wavelength cross-connect device 2 via an optical cross-connect device, and an output port B in the wavelength cross-connect device 1 is connected to an input port 2 in the wavelength cross-connect device 3 via the optical cross-connect device. An output port 3 in the wavelength cross-connect device 3 is connected to a computing apparatus 4 in the computing node 3.

After configuring, on the optical cross-connect device, a connection between the wavelength cross-connect device 1 and the wavelength cross-connect device 2 and a connection between the wavelength cross-connect device 1 and the wavelength cross-connect device 3, an SDN controller may send routing table configuration requests to the computing apparatus 1 in the computing node 1 and the computing apparatus 4 in the computing node 3, so that each computing apparatus generates a corresponding routing table.

Specifically, the first piece of content recorded in a routing table generated by the computing apparatus 1 includes: A source computing node is the computing node 1, a destination computing node is the computing node 2, a transmit end output port is the output port A in the wavelength cross-connect device 1, and a receive end input port is an input port 1 in the wavelength cross-connect device 2.

The second piece of content recorded in the routing table generated by the computing apparatus 1 includes: The source computing node is the computing node 1, the destination computing node is the computing node 3, the transmit end output port is the output port B in the wavelength cross-connect device 1, and the receive end input port is the input port 2 in the wavelength cross-connect device 3.

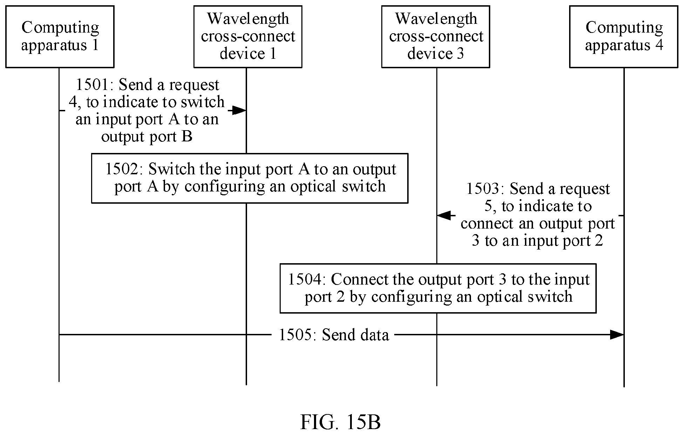

FIG. 15B is a schematic configuration flowchart of communication between computing apparatuses according to an embodiment of this application. As shown in FIG. 15B, based on the architecture shown in FIG. 15A, a procedure in which the computing apparatus 1 switches a communication object from the computing apparatus 3 in the computing node 2 to the computing apparatus 4 in the computing node 3 includes step 1501 to step 1505.

Step 1501: When communication between the computing apparatus 1 and the computing apparatus 3 in the computing node 2 is completed, and the computing apparatus 1 needs to send data to the computing apparatus 4 in the computing node 3, the computing apparatus 1 sends a request 4 to the wavelength cross-connect device 1 based on the routing table, to indicate to switch the input port A connected to the computing apparatus 1 to the output port B connected to the optical cross-connect device.

Because the routing table in the computing apparatus 1 indicates that the wavelength cross-connect device 1 is connected to the computing node 3 via the output port B, the computing apparatus 1 may send the request 4 to the wavelength cross-connect device 1, to indicate to switch the input port A connected to the computing apparatus 1 to the output port B connected to the optical cross-connect device.

Step 1502: The wavelength cross-connect device 1 switches, based on the received request 4, the input port A connected to the computing apparatus 1 to the output port B connected to the optical cross-connect device by configuring an optical switch.

Specifically, the wavelength cross-connect device 1 may switch an optical switch connected to the input port A to the output port B, to implement a connection between the computing apparatus 1 and the computing node 3 via the wavelength cross-connect device 1 and the optical cross-connect device.

Step 1503: When the computing apparatus 4 needs to receive the data sent by the computing apparatus 1, the computing apparatus 4 sends a request 5 to the wavelength cross-connect device 3 based on a routing table, to indicate to connect the output port 3 connected to the computing apparatus 4 to the input port 2 connected to the optical cross-connect device.

Because the routing table in the computing apparatus 4 indicates that the wavelength cross-connect device 3 is connected to the optical cross-connect device via the input port 2, the computing apparatus 4 may send the request 5 to the wavelength cross-connect device 3 to indicate to connect the output port 3 connected to the computing apparatus 4 to the input port 2 connected to the optical cross-connect device.

Step 1504: The wavelength cross-connect device 3 connects, based on the received request 5, the output port 3 connected to the computing apparatus 4 to the input port 2 connected to the optical cross-connect device by configuring an optical switch.

Step 1505: The computing apparatus 1 sends the data to the computing apparatus 4 via the wavelength cross-connect device 1, the optical cross-connect device, and the wavelength cross-connect device 3.

After the computing apparatus 1 and the computing apparatus 4 are both connected to the optical cross-connect device, the computing apparatus 1 may send the data to the computing apparatus 4 via the wavelength cross-connect device 1, the optical cross-connect device, and the wavelength cross-connect device 3.

The foregoing describes the process of configuring the wavelength cross-connect devices and the optical cross-connect device. For ease of understanding, the following describes configuration examples of computing clusters in an AI distributed training scenario and a tenant scenario with reference to specific examples.

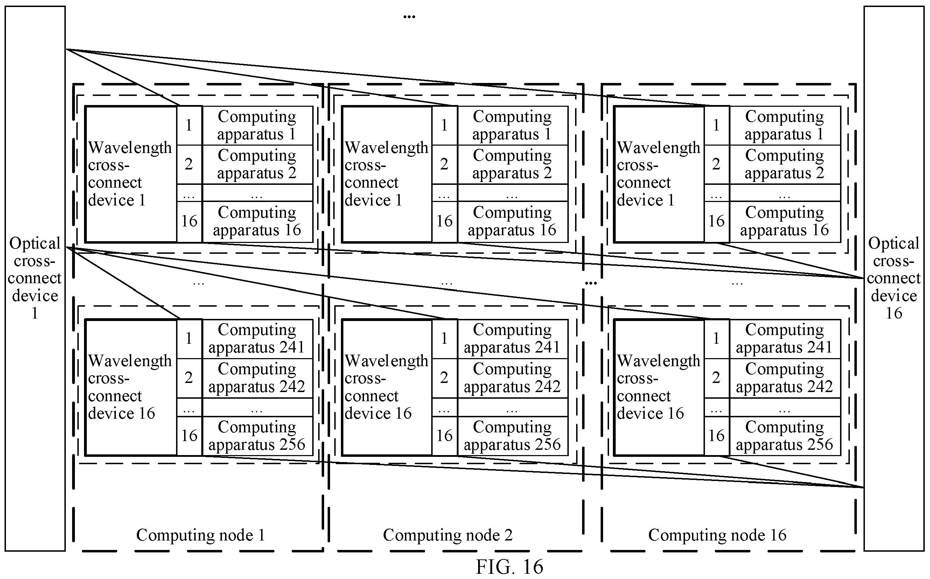

FIG. 16 is a schematic configuration diagram of a computing cluster in an AI distributed training scenario according to an embodiment of this application. As shown in FIG. 16, in the AI distributed training scenario, the computing cluster includes 16 computing nodes, each computing node includes 32 child nodes, and each child node includes 16 computing apparatuses. In this scenario, each child node is configured with a corresponding wavelength cross-connect device, in other words, a quantity of wavelength cross-connect devices is 16*32=512. In addition, each wavelength cross-connect device includes 16 ports, which are respectively configured to connect the 16 computing apparatuses in the child node. In addition, 16 optical cross-connect devices are further configured in the computing cluster. In the 16 optical cross-connect devices, the first optical cross-connect device is connected to the first ports in all wavelength cross-connect devices, the second optical cross-connect device is connected to the second ports in all the wavelength cross-connect devices, ..., and the 16th optical cross-connect device is connected to the 16th ports in all the wavelength cross-connect devices. By analogy, all ports with a same number in all the wavelength cross-connect devices in the computing cluster access a same optical cross-connect device.

In the computing cluster shown in FIG. 16, for any computing apparatus, a wavelength cross-connect device connected to the computing apparatus is respectively connected to the 16 optical cross-connect devices through 16 ports. Therefore, the computing apparatus can communicate with any computing apparatus in other 511 child nodes.

The scenario in FIG. 16 shows how to configure the wavelength cross-connect device and the optical cross-connect device in the computing cluster in small-scale networking. The following describes how to configure a wavelength cross-connect device and an optical cross-connect device in a computing cluster in large-scale networking.

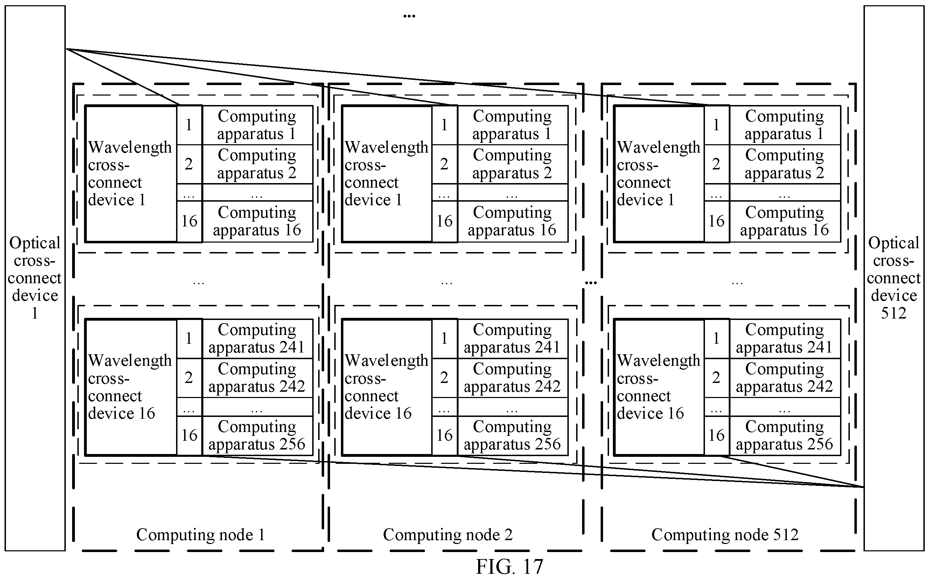

FIG. 17 is a schematic configuration diagram of another computing cluster in an AI distributed training scenario according to an embodiment of this application. As shown in FIG. 17, in the AI distributed training scenario, the computing cluster includes 512 computing nodes, each computing node includes 32 child nodes, and each child node includes 16 computing apparatuses, that is, each computing node includes 32*16=512 computing apparatuses. In this scenario, each child node is configured with a corresponding wavelength cross-connect device, in other words, a quantity of wavelength cross-connect devices is 512*32=16384. In addition, each wavelength cross-connect device includes 16 ports, which are respectively configured to connect the 16 computing apparatuses in the child node.

In addition, 512 optical cross-connect devices are further configured in the computing cluster. In the 512 optical cross-connect devices, the first optical cross-connect device is connected to the first port (in other words, connected to a computing apparatus numbered 1) in the first wavelength cross-connect device in the 512 computing nodes, the second optical cross-connect device is connected to the second port (in other words, connected to a computing apparatus numbered 2) in the first wavelength cross-connect device in the 512 computing nodes, ..., the 17th optical cross-connect device is connected to the first port (in other words, connected to a computing apparatus numbered 17) in the second wavelength cross-connect device in the 512 computing nodes, ..., and the 512th optical cross-connect device is connected to the 16th port (in other words, connected to a computing apparatus numbered 512) in the 32nd wavelength cross-connect device in the 512 computing nodes. By analogy, different ports in a wavelength cross-connect device in any computing node in the computing cluster respectively access different optical cross-connect devices.

In the computing cluster shown in FIG. 17, in each computing node, only computing apparatuses (namely, computing apparatuses with a same number) at a same location are connected to a same optical cross-connect device via wavelength cross-connect devices. Therefore, for a computing apparatus A and a computing apparatus B that are located at different locations in different computing nodes, the computing apparatus A needs to first communicate with a computing apparatus C in a same computing node, and then the computing apparatus C communicates with the computing apparatus B. The computing apparatus C and the computing apparatus A are located in the same computing node, and the computing apparatus C and the computing apparatus B are located at a same location in the different computing nodes.

For example, it is assumed that the computing cluster includes a first computing node, a second computing node, and a third computing node, the first computing node is connected to the second computing node via a computing apparatus in a first child node in the first computing node, and the first computing node is connected to the third computing node via a computing apparatus in a second child node in the first computing node. When the computing apparatus in the first child node needs to communicate with a computing apparatus in the third computing node, the computing apparatus in the first child node first sends data to the computing apparatus in the second child node, and then the computing apparatus in the second child node sends the data to the computing apparatus in the third computing node. In other words, when a computing apparatus in a child node in a computing node cannot establish a connection to a computing apparatus in another computing node via the wavelength cross-connect device and the optical cross-connect device, the computing apparatus in the child node may send data to a computing apparatus in another child node in the same computing node, and the computing apparatus in the another child node helps forward the data to the computing apparatus in the another computing node, so that communication between any computing apparatuses in a large-scale computing cluster is implemented.

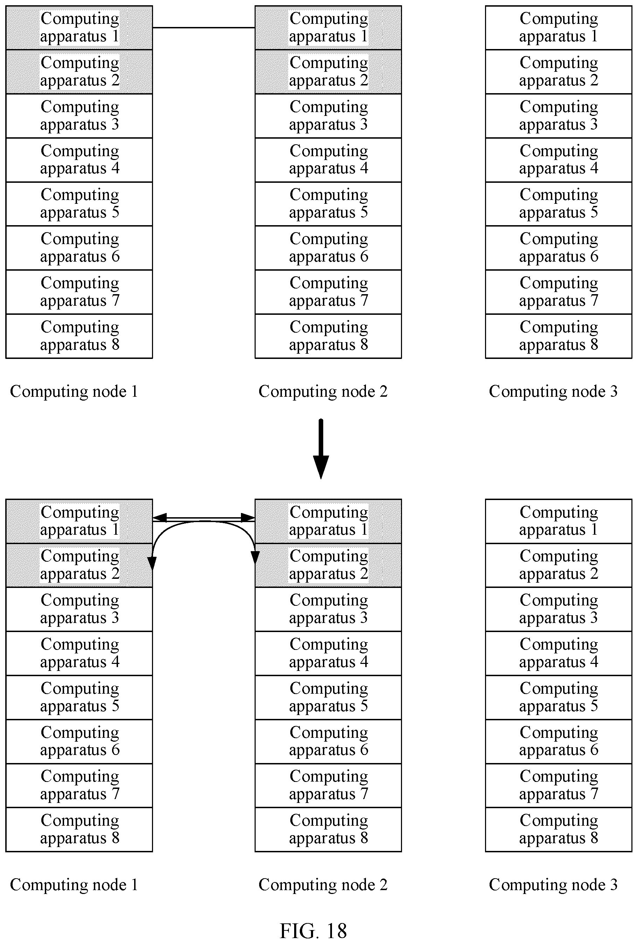

FIG. 18 is a schematic configuration diagram of a computing cluster in a tenant scenario according to an embodiment of this application. As shown in FIG. 18, the computing cluster includes a computing node 1 to a computing node 3, and each computing node includes eight computing apparatuses. In addition, a computing apparatus 1 in the computing node 1 and a computing apparatus 1 in the computing node 2 are configured to be connected via an optical cross-connect device. In the computing cluster, a tenant rents the computing apparatus 1 and a computing apparatus 2 in the computing node 1, and the computing apparatus 1 and a computing apparatus 2 in the computing node 2.

In this case, to implement communication between the computing apparatuses rented by the tenant, wavelength cross-connect devices connected to the computing apparatuses rented by the tenant may be configured. After the wavelength cross-connect devices are configured, the computing apparatus 1 in the computing node 1 can communicate with the computing apparatus 1 in the computing node 2 via the optical cross-connect device, and the computing apparatus 2 in the computing node 1 can also communicate with the computing apparatus 2 in the computing node 2 via the optical cross-connect device.

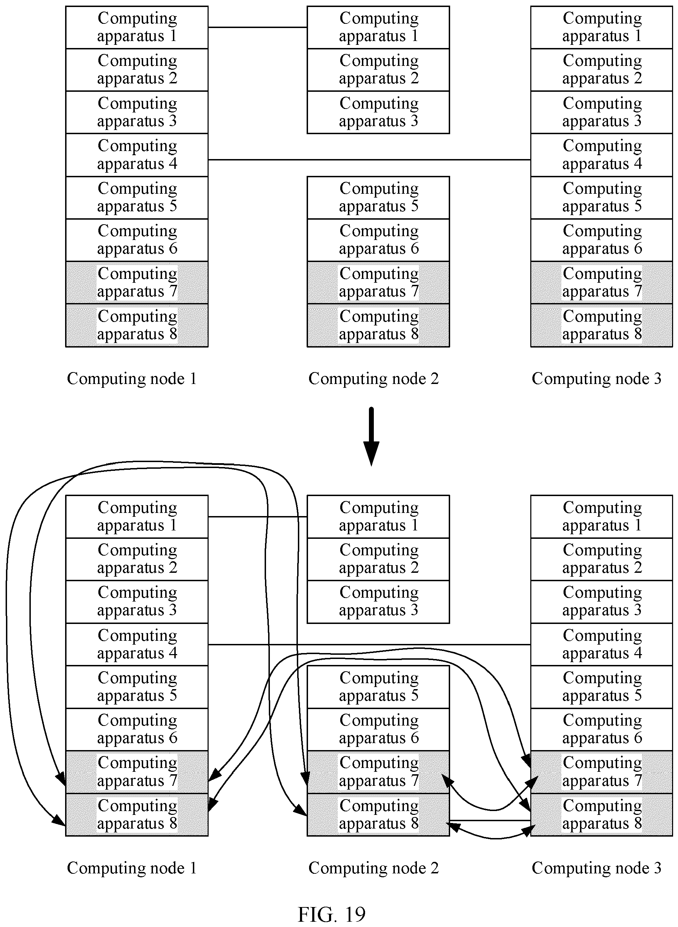

FIG. 19 is a schematic configuration diagram of another computing cluster in a tenant scenario according to an embodiment of this application. As shown in FIG. 19, the computing cluster includes a computing node 1 to a computing node 3, and each computing node includes eight computing apparatuses. In addition, a computing apparatus 1 in the computing node 1 and a computing apparatus 1 in the computing node 2 are configured to be connected via an optical cross-connect device, and a computing apparatus 4 in the computing node 1 and a computing apparatus 4 in the computing node 3 are also configured to be connected via an optical cross-connect device. In the computing cluster, a tenant rents a computing apparatus 7 and a computing apparatus 8 in the computing node 1, a computing apparatus 7 and a computing apparatus 8 in the computing node 2, and a computing apparatus 7 and a computing apparatus 8 in the computing node 3.

In this case, because no connection is configured between the computing node 2 and the computing node 3, an optical cross-connect device may be first configured to implement a connection between the computing node 2 and the computing node 3, and then wavelength cross-connect devices connected to the computing apparatuses rented by the tenant are configured. After the optical cross-connect device and the wavelength cross-connect devices are configured, the computing apparatus 7 in the computing node 1 can communicate with the computing apparatuses 7 in the computing node 2 and the computing node 3 via the optical cross-connect device, and the computing apparatus 8 in the computing node 1 can also communicate with the computing apparatuses 8 in the computing node 2 and the computing node 3 via the optical cross-connect device. In addition, the computing apparatus 7 in the computing node 2 can communicate with the computing apparatus 7 in the computing node 3 via the optical cross-connect device, and the computing apparatus 8 in the computing node 2 can also communicate with the computing apparatus 8 in the computing node 3 via the optical cross-connect device.

An embodiment of this application further provides a computing cluster connection method. A computing cluster includes a first computing node and a second computing node. Specifically, the method includes:
connecting a plurality of computing apparatuses in the first computing node to at least one first wavelength cross-connect device, and connecting a plurality of computing apparatuses in the second computing node to at least one second wavelength cross-connect device; and
connecting the at least one first wavelength cross-connect device to the at least one second wavelength cross-connect device via an optical cross-connect device, to enable any one of the plurality of computing apparatuses in the first computing node to be connected to any one of the plurality of computing apparatuses in the second computing node via the at least one first wavelength cross-connect device, the optical cross-connect device, and the at least one second wavelength cross-connect device.

In a possible implementation, the first computing node is a first physical device, the plurality of computing apparatuses in the first computing node belong to the first physical device, and a quantity of the at least one first wavelength cross-connect device is 1. The second computing node is a second physical device, the plurality of computing apparatuses in the second computing node belong to the second physical device, and a quantity of the at least one second wavelength cross-connect device is 1. The first physical device and the second physical device may be physical servers. In a possible implementation, the plurality of computing apparatuses in the first computing node belong to a plurality of child nodes, one child node corresponds to one wavelength cross-connect device, the plurality of computing apparatuses in the second computing node belong to a plurality of child nodes, and one child node corresponds to one wavelength cross-connect device.

In a possible implementation, there are a plurality of optical cross-connect devices in the computing cluster, and the plurality of computing apparatuses in the first computing node and the plurality of computing apparatuses in the second computing node each have a number. The connecting the at least one first wavelength cross-connect device to the at least one second wavelength cross-connect device via an optical cross-connect device may specifically include: connecting wavelength cross-connect devices connected to computing apparatuses with a same number in the first computing node and the second computing node to a same optical cross-connect device.

Alternatively, the plurality of computing apparatuses in the first computing node belong to the plurality of child nodes, the plurality of computing apparatuses in the second computing node belong to the plurality of child nodes, the plurality of child nodes in the first computing node and the plurality of child nodes in the second computing node each have a number. The connecting the at least one first wavelength cross-connect device to the at least one second wavelength cross-connect device via an optical cross-connect device specifically includes: connecting wavelength cross-connect devices connected to child nodes with a same number in the first computing node and the second computing node to a same optical cross-connect device.

In a possible implementation, a first computing apparatus in the first computing node is connected to a second computing apparatus in the second computing node, and when the first computing apparatus in the first computing node needs to be connected to a third computing apparatus in the second computing node, a wavelength cross-connect device that connects both the second computing apparatus and the third computing apparatus switches a connection between the first computing apparatus and the second computing apparatus to a connection between the first computing apparatus and the third computing apparatus.

In a possible implementation, that a target wavelength cross-connect device that connects the second computing apparatus and the third computing apparatus switches a connection between the first computing apparatus and the second computing apparatus to a connection between the first computing apparatus and the third apparatus includes: The third computing apparatus sends a request to the target wavelength cross-connect device, and the target wavelength cross-connect device connects, based on the request, the input port connected to the first computing apparatus to the output port connected to the third computing apparatus.

In a possible implementation, each computing apparatus in the first computing node and the second computing node includes a routing table, and the routing table indicates a connection relationship between a wavelength cross-connect device connected to the computing apparatus and another computing apparatus. That a target wavelength cross-connect device that connects the second computing apparatus and the third computing apparatus switches a connection between the first computing apparatus and the second computing apparatus to a connection between the first computing apparatus and the third apparatus specifically includes:
The third computing apparatus determines, based on a routing table in the third computing apparatus, an input port connected to the first computing apparatus and an output port connected to the third computing apparatus that are in the target wavelength cross-connect device, and sends a request to the target wavelength cross-connect device, and the target wavelength cross-connect device connects, based on the request, the input port connected to the first computing apparatus to the output port connected to the third computing apparatus.

In a possible implementation, the method further includes:
An SDN controller configures a connection between wavelength cross-connect devices in the optical cross-connect device.

The SDN controller sends a routing table configuration request to each computing apparatus, to enable each computing apparatus to generate the routing table.

In a possible implementation, the computing cluster further includes a third computing node. The method further includes:
connecting a computing apparatus in a first child node in the first computing node to the second computing node, and connecting a computing apparatus in a second child node in the first computing node to the third computing node, to enable, when the computing apparatus in the first child node needs to communicate with a computing apparatus in the third computing node, the computing apparatus in the first child node to send data to the computing apparatus in the second child node, and the computing apparatus in the second child node to send the data to the computing apparatus in the third computing node.

In a possible implementation, the computing cluster is configured to execute an artificial intelligence task or an HPC task.

The foregoing descriptions are merely some implementations of this application. It should be noted that a person of ordinary skill in the art may make several improvements without departing from the principle of this application and the improvements shall fall within the protection scope of this application.

## Claims

1. A computing cluster, comprising a first computing node and a second computing node, wherein the first computing node and the second computing node each comprise a plurality of computing apparatuses;
the plurality of computing apparatuses in the first computing node are connected to at least one first wavelength cross-connect device, and the plurality of computing apparatuses in the second computing node are connected to at least one second wavelength cross-connect device;
the at least one first wavelength cross-connect device is connected to the at least one second wavelength cross-connect device via an optical cross-connect device; and
any one of the plurality of computing apparatuses in the first computing node is connected to any one of the plurality of computing apparatuses in the second computing node via the at least one first wavelength cross-connect device, the optical cross-connect device, and the at least one second wavelength cross-connect device.

2. The computing cluster according to claim 1, wherein the first computing node is a first physical device, the plurality of computing apparatuses in the first computing node belong to the first physical device, a quantity of the at least one first wavelength cross-connect device is 1, the second computing node is a second physical device, the plurality of computing apparatuses in the second computing node belong to the second physical device, and a quantity of the at least one second wavelength cross-connect device is 1.

3. The computing cluster according to claim 1, wherein the plurality of computing apparatuses in the first computing node belong to a plurality of child nodes, one child node corresponds to one wavelength cross-connect device, the plurality of computing apparatuses in the second computing node belong to a plurality of child nodes, and one child node corresponds to one wavelength cross-connect device.

4. The computing cluster according to any one of claims 1 to 3, wherein there are a plurality of optical cross-connect devices, the plurality of computing apparatuses in the first computing node and the plurality of computing apparatuses in the second computing node each have a number, and computing apparatuses with a same number in the first computing node and the second computing node are connected to a same optical cross-connect device via wavelength cross-connect devices; or
the plurality of computing apparatuses in the first computing node belong to the plurality of child nodes, the plurality of computing apparatuses in the second computing node belong to the plurality of child nodes, the plurality of child nodes in the first computing node and the plurality of child nodes in the second computing node each have a number, and child nodes with a same number in the first computing node and the second computing node are connected to a same optical cross-connect device via wavelength cross-connect devices.

5. The computing cluster according to any one of claims 1 to 4, wherein a first computing apparatus in the first computing node is connected to a second computing apparatus in the second computing node, and when the first computing apparatus in the first computing node needs to be connected to a third computing apparatus in the second computing node, a wavelength cross-connect device that connects both the second computing apparatus and the third computing apparatus switches a connection between the first computing apparatus and the second computing apparatus to a connection between the first computing apparatus and the third computing apparatus.

6. The computing cluster according to claim 5, wherein that a target wavelength cross-connect device that connects the second computing apparatus and the third computing apparatus switches a connection between the first computing apparatus and the second computing apparatus to a connection between the first computing apparatus and the third apparatus comprises: the third computing apparatus sends a request to the target wavelength cross-connect device, and the target wavelength cross-connect device connects, based on the request, an input port connected to the first computing apparatus to an output port connected to the third computing apparatus.

7. The computing cluster according to claim 5, wherein each computing apparatus in the first computing node and the second computing node comprises a routing table, and the routing table indicates a connection relationship between a wavelength cross-connect device connected to the computing apparatus and another computing apparatus; and
that a target wavelength cross-connect device that connects the second computing apparatus and the third computing apparatus switches a connection between the first computing apparatus and the second computing apparatus to a connection between the first computing apparatus and the third apparatus comprises:
the third computing apparatus determines, based on a routing table in the third computing apparatus, an input port connected to the first computing apparatus and an output port connected to the third computing apparatus that are in the target wavelength cross-connect device, and sends a request to the target wavelength cross-connect device, and the target wavelength cross-connect device connects, based on the request, the input port to the output port.

8. The computing cluster according to claim 7, wherein each computing apparatus generates the routing table by receiving a routing table configuration request sent by a software defined network SDN controller, and the SDN controller is configured to configure a connection between wavelength cross-connect devices in the optical cross-connect device.

9. The computing cluster according to any one of claims 1 to 8, wherein the computing cluster further comprises a third computing node, the first computing node is connected to the second computing node via a computing apparatus in a first child node in the first computing node, the first computing node is connected to the third computing node via a computing apparatus in a second child node in the first computing node, and when the computing apparatus in the first child node needs to communicate with a computing apparatus in the third computing node, the computing apparatus in the first child node sends data to the computing apparatus in the second child node, and then the computing apparatus in the second child node sends the data to the computing apparatus in the third computing node.

10. The computing cluster according to any one of claims 1 to 9, wherein the computing cluster is configured to execute an artificial intelligence task or an HPC task.

11. A computing cluster connection method, wherein a computing cluster comprises a first computing node and a second computing node, and the method comprises:
connecting a plurality of computing apparatuses in the first computing node to at least one first wavelength cross-connect device, and connecting a plurality of computing apparatuses in the second computing node to at least one second wavelength cross-connect device; and
connecting the at least one first wavelength cross-connect device to the at least one second wavelength cross-connect device via an optical cross-connect device, to enable any one of the plurality of computing apparatuses in the first computing node to be connected to any one of the plurality of computing apparatuses in the second computing node via the at least one first wavelength cross-connect device, the optical cross-connect device, and the at least one second wavelength cross-connect device.

12. The method according to claim 11, wherein the first computing node is a first physical device, the plurality of computing apparatuses in the first computing node belong to the first physical device, a quantity of the at least one first wavelength cross-connect device is 1, the second computing node is a second physical device, the plurality of computing apparatuses in the second computing node belong to the second physical device, and a quantity of the at least one second wavelength cross-connect device is 1.

13. The method according to claim 11, wherein the plurality of computing apparatuses in the first computing node belong to a plurality of child nodes, one child node corresponds to one wavelength cross-connect device, the plurality of computing apparatuses in the second computing node belong to a plurality of child nodes, and one child node corresponds to one wavelength cross-connect device.

14. The method according to any one of claims 11 to 13, wherein there are a plurality of optical cross-connect devices, and the plurality of computing apparatuses in the first computing node and the plurality of computing apparatuses in the second computing node each have a number; and
the connecting the at least one first wavelength cross-connect device to the at least one second wavelength cross-connect device via an optical cross-connect device comprises:
connecting wavelength cross-connect devices connected to computing apparatuses with a same number in the first computing node and the second computing node to a same optical cross-connect device; or
the plurality of computing apparatuses in the first computing node belong to the plurality of child nodes, the plurality of computing apparatuses in the second computing node belong to the plurality of child nodes, the plurality of child nodes in the first computing node and the plurality of child nodes in the second computing node each have a number; and
the connecting the at least one first wavelength cross-connect device to the at least one second wavelength cross-connect device via an optical cross-connect device comprises:
connecting wavelength cross-connect devices connected to child nodes with a same number in the first computing node and the second computing node to a same optical cross-connect device.

15. The method according to any one of claims 11 to 14, wherein a first computing apparatus in the first computing node is connected to a second computing apparatus in the second computing node, and when the first computing apparatus in the first computing node needs to be connected to a third computing apparatus in the second computing node, a wavelength cross-connect device that connects both the second computing apparatus and the third computing apparatus switches a connection between the first computing apparatus and the second computing apparatus to a connection between the first computing apparatus and the third computing apparatus.

16. The method according to claim 15, wherein that a target wavelength cross-connect device that connects the second computing apparatus and the third computing apparatus switches a connection between the first computing apparatus and the second computing apparatus to a connection between the first computing apparatus and the third apparatus comprises:
the third computing apparatus sends a request to the target wavelength cross-connect device, and the target wavelength cross-connect device connects, based on the request, an input port connected to the first computing apparatus to an output port connected to the third computing apparatus.

17. The method according to claim 15, wherein each computing apparatus in the first computing node and the second computing node comprises a routing table, and the routing table indicates a connection relationship between a wavelength cross-connect device connected to the computing apparatus and another computing apparatus; and
that a target wavelength cross-connect device that connects the second computing apparatus and the third computing apparatus switches a connection between the first computing apparatus and the second computing apparatus to a connection between the first computing apparatus and the third apparatus comprises:
the third computing apparatus determines, based on a routing table in the third computing apparatus, an input port connected to the first computing apparatus and an output port connected to the third computing apparatus that are in the target wavelength cross-connect device, and sends a request to the target wavelength cross-connect device, and the target wavelength cross-connect device connects, based on the request, the input port to the output port.

18. The method according to claim 17, wherein the method further comprises:
configuring, by an SDN controller, a connection between wavelength cross-connect devices in the optical cross-connect device; and
sending, by the SDN controller, a routing table configuration request to each computing apparatus, to enable each computing apparatus to generate the routing table.

19. The method according to any one of claims 11 to 18, wherein the computing cluster further comprises a third computing node, and the method further comprises:
connecting a computing apparatus in a first child node in the first computing node to the second computing node, and connecting a computing apparatus in a second child node in the first computing node to the third computing node, to enable, when the computing apparatus in the first child node needs to communicate with a computing apparatus in the third computing node, the computing apparatus in the first child node to send data to the computing apparatus in the second child node, and the computing apparatus in the second child node to send the data to the computing apparatus in the third computing node.

20. The method according to any one of claims 11 to 19, wherein the computing cluster is configured to execute an artificial intelligence task or an HPC task.
